(19) Europäisches Patentamt
European Patent Office
Office européen des brevets

(11) **EP 2 277 304 B1**

## (12) EUROPÄISCHE PATENTSCHRIFT

(45) Veröffentlichungstag und Bekanntmachung des Hinweises auf die Patenterteilung:
**18.07.2018   Patentblatt 2018/29**

(21) Anmeldenummer: **09738484.6**

(22) Anmeldetag: **16.06.2009**

(51) Int Cl.:
***H04N 1/60*** *(2006.01)*

(86) Internationale Anmeldenummer:
**PCT/IB2009/005959**

(87) Internationale Veröffentlichungsnummer:
**WO 2009/133471 (05.11.2009 Gazette 2009/45)**

(54) **VERFAHREN UND VORRICHTUNG ZUR ORIGINALGETREUEN WIEDERGABE VON FARBEN AUF BILDSCHIRMEN**

METHOD AND DEVICE FOR THE TRUE-TO-ORIGINAL REPRESENTATION OF COLORS ON SCREENS

PROCÉDÉ ET DISPOSITIF PERMETTANT LE RENDU DE COULEURS SUR DES ÉCRANS DE MANIÈRE FIDÈLE À UN ORIGINAL

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **28.04.2008   DE 102008021148**

(43) Veröffentlichungstag der Anmeldung:
**26.01.2011   Patentblatt 2011/04**

(73) Patentinhaber: **Caddon Color Technology Gmbh 52072 Aachen (DE)**

(72) Erfinder:
 • **HILL, Bernhard**
   **52074 Aachen (DE)**
 • **POST, Ronald**
   **53117 Bonn (DE)**
 • **HELLING, Stephen**
   **52066 Aachen (DE)**
 • **GLOWINSKI, Arndt**
   **52074 Aachen (DE)**

(74) Vertreter: **Binder, Armin Neue Bahnhofstrasse 16 89335 Ichenhausen (DE)**

(56) Entgegenhaltungen:
EP-A- 1 889 721     WO-A-01/28231
DE-A1- 10 121 984     DE-A1-102005 028 487
US-A- 4 106 846     US-A- 5 634 117

 • VIENOT F: "Fundamental chromaticity diagram with physiologically significant axes" 9TH CONGRESS OF THE INTERNATIONAL COLOUR ASSOCIATION 24-29 JUNE 2001 ROCHESTER, NY, USA, Bd. 4421, 2002, Seiten 565-570, XP002582485 IE-Int. Soc. Opt. Eng USA LNKD-doi:10.1117/12.464649 ISSN: 0277-786X
 • Phil Downen: "THE STANDARDS for measuring flat- Origins and Applicability of Standards", SID - Information Display, 1 January 2006 (2006-01-01), pages 16-21, XP055406880, Retrieved from the Internet: URL:http://www.westardisplaytechnologies.com/wp-content/uploads/FPD-Measurement-Standards.pdf [retrieved on 2017-09-14]

EP 2 277 304 B1

**Beschreibung**

**1. Hintergrund der Erfindung und Stand der Technik**

Die Erfindung betrifft ein Verfahren und eine Vorrichtung zur originalgetreuen elektronischen Wiedergabe von Farben und farbigen Bildvorlagen auf einem Bildschirm im direkten Vergleich mit einer physischen Farbvorlage (=Softproof).

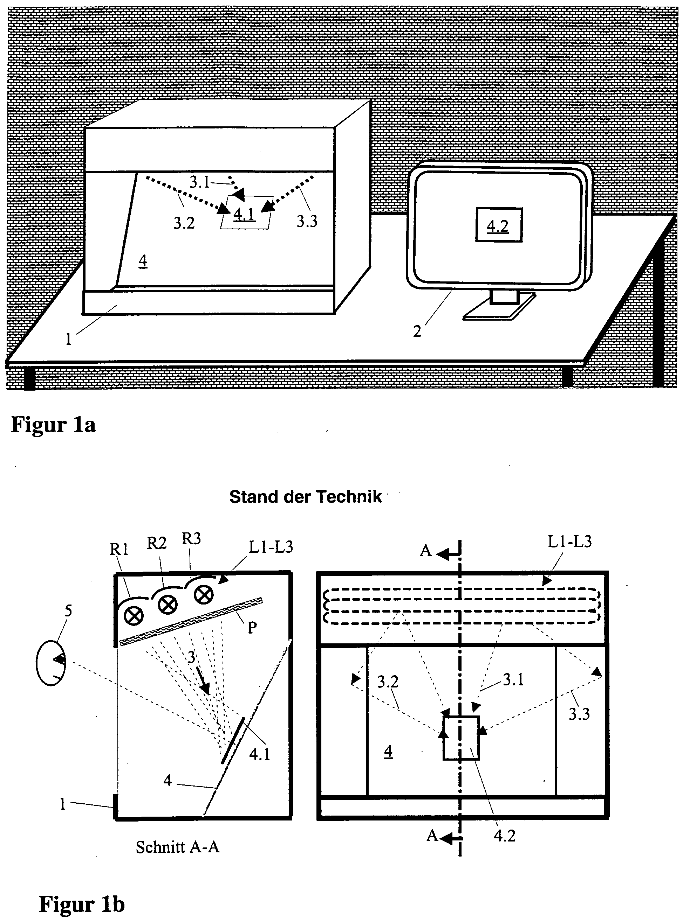

Bekannte und übliche Verfahren und Vorrichtungen zum Vergleich von Farben, die einerseits als physikalische Vorlage vorliegen und andererseits auf einem Bildschirm reproduziert werden, benutzen z.B. einen Röhren- oder LCD-Bildschirm, der neben einer Betrachtungskabine (auch Lichtkabine genannt) mit einer schräg angeordneten Auflagefläche unter definierter Beleuchtung angeordnet wird. Ein Beispiel für eine derartige Abmusterung ist in den **Figuren 1a und 1b** skizziert. Eine Betrachtungskabine 1 steht neben einem Bildschirm 2. In der Kabine 1 ist eine Beleuchtung aus mehreren Leuchtstoffröhren L1 - L3 schräg über einer Betrachtungsfläche 4 angeordnet. Diese Beleuchtung L1-L3 sendet Licht 3, bestehend aus direkt einfallender Lichtstrahlung 3.1 und indirektes Licht durch reflektierte Lichtstrahlung 3.2, 3.3 auf eine Betrachtungsfläche 4. Eine originale Farbprobe 4.1 befindet sich auf der Betrachtungsfläche 4 in der Kabine 1, ihre Farbreproduktion 4.2 erscheint auf dem Bildschirm 2. Derartige Abmusterungsplätze sind allgemein bekannt und entsprechen auf dem Markt verfügbaren Produkten verschiedener Anbieter.

Eine zu vergleichende Farbe 4.1 wird für eine elektronische Reproduktion mit einem Farbmessgerät ausgemessen oder mit einem Farbscanner für ein ganzes Farbbild aufgenommen, und ihre Farbwerte werden auf dem Bildschirm in elektronischer Form als Bild reproduziert. Farbwerte als Maß der Farben sind in der Technik durch den CIE1931 2-Grad Normbeobachter oder den CIE1964 10-Grad Normbeobachter standardisiert. Die Messtechnik zur Messung der Farbwerte ist in DIN 5033 oder für die graphische Industrie in dem Standard ISO 13655 beschrieben. Übliche Farbmessgeräte liefern Farbwerte entweder als standardisierte CIE1931 XYZ-Werte (integrales Farbmessgerät) oder aber sie messen die spektrale Reflexion $\beta(\lambda)$ der Farbprobe (Spektralphotometer). Im letzteren Fall können mit deren Hilfe und mit den durch einen Normbeobachter definierten Spektralwertkurven x($\lambda$), y($\lambda$) und z($\lambda$) die Normfarbwerte X, Y und Z berechnet werden:

$$X = k \int_{380nm}^{780nm} S_\lambda \beta(\lambda)x(\lambda)d\lambda \, , \, Y = k \int_{380nm}^{780nm} S_\lambda \beta(\lambda)y(\lambda)d\lambda \, , \, Z = k \int_{380nm}^{780nm} S_\lambda \beta(\lambda)z(\lambda)d\lambda \qquad \text{Gl. 1}$$

Die Farbwerte sind immer als relative Größen definiert und k ist eine Normierungskonstante. Zur genauen Berechnung der Farbwerte einer Farbprobe muss mit den spektralen Verteilungen der Reflexion der Probe und des Lichtes gearbeitet werden. Dazu muss die spektrale Verteilung $S_\lambda$ der auf die Probe auftreffenden Strahlung durch die Beleuchtung 3 in der Kabine bekannt sein. Diese muss daher sehr genau ausgemessen werden.

Die von der Probe reflektierten Lichtanteile bilden den sogenannten Farbreiz und werden durch das Produkt aus spektraler Verteilung der Beleuchtung der Probe und der Reflexion der Probe beschrieben und spektraler Farbreiz genannt, $\varphi(\lambda) = S_\lambda \beta(\lambda)$. Der von der Probe reflektierte spektrale Farbreiz wird vom Auge eines menschlichen Beobachters aufgenommen und trifft auf die Netzhaut des Auges, wo er die Farbwahrnehmung des menschlichen Beobachters auslöst. Alle spektralen Anteile werden zur Ermittlung der Normfarbwerte über den für das menschliche Auge sichtbaren Wellenlängenbereich von 380 bis 780 nm integriert. Der Wert k in Gl. 1 ist eine Normierungskonstante, welche üblicherweise durch den Y-Wert einer weißen Farbprobe unter der gleichen Beleuchtung als hellste Farbe oder direkt aus dem Farbwert Y der Lichtquelle bestimmt wird:

$$k = 1{,}0 / \int_{380nm}^{780nm} S_\lambda \beta_{wei\beta}(\lambda)y(\lambda)d\lambda \, \text{ oder } \, k = 1{,}0 / \int_{380nm}^{780nm} S_\lambda y(\lambda)d\lambda \qquad \text{Gl. 2}$$

Die Farbwerte sind damit bezogene Größen und unterscheiden sich von absoluten Größen, welche z.B. im Lichtfluss oder der Lichtintensität beschrieben werden und die absolute Helligkeit einer Farbe bestimmen.

Für die Reproduktion einer Farbe auf dem Bildschirm 2 wird von den Farbwerten nach Gl. 1 ausgegangen. Für eine exakte Farbreproduktion muss der Bildschirm kalibriert werden, damit ein eingegebener Farbwert auch messtechnisch mit gleichen Farbwerten auf dem Bildschirm reproduziert wird. Hierzu werden heute die bekannten Verfahren des sogenannten "Color Managements" eingesetzt. Die Vorgehensweise zur Reproduktion der Farbwerte auf einem Bildschirm ist durch das "International Color Consortium" (ICC) vereinheitlicht worden und kann z.B. unter http://www.color.org über das Internet eingesehen werden.

Wenn die ausgemessenen und unter der Beleuchtung der Betrachtungskabine reproduzierten Farbwerte mit den Farben, die auf dem Bildschirm reproduziert werden, messtechnisch übereinstimmmen, dann wird eine visuelle Übereinstimmung der beiden Farben für einen menschlichen Beobachter erwartet.

In der Praxis wird bisher eine gleichaussehende Reproduktion eines Originals, also einer originalen physischen Farbvorlage, nur unbefriedigend erreicht. Dies hat nach der Erkenntnis des Erfinders mehrere Gründe, die nachfolgend aufgeführt sind.

## 1.1 Ortsabhängige Verteilung der spektralen Beleuchtung

Ein erster Grund für oft nicht übereinstimmende Farben ist, dass Farbmessgeräte, mit denen die spektrale Reflexion einer Farbe bestimmt wird, eine bestimmte Beleuchtungsgeometrie benutzen, wie sie z.B. in DIN 5033 definiert ist. Dies kann z.B. eine gerichtete Beleuchtung unter 45 Grad sein (sogenannte 45/0 Geometrie), bei der ein Beobachter senkrecht auf die Probe schaut. Benutzt wird auch eine 0/45 Grad Geometrie, bei der die Probe senkrecht beleuchtet und der Beobachter unter 45 Grad auf die Probe schaut oder eine diffuse Lichtmessung mit einer Ulbrichtkugel. In den üblichen Lichtkabinen lässt sich eine definierte Beleuchtungsgeometrie wie die in einem Farbmessgerät nicht exakt nachbilden. Meist wird eine Lichtquelle durch mehrere Leuchtstoffröhren im oberen Bereich einer Kabine realisiert, um eine Probe zu beleuchten. Um die Homogenität der Ausleuchtung zu erhöhen, sind auch Kabinen bekannt, die eine weitere Leuchtstoffröhre im unteren Bereich der Kabine verwenden.

Das direkt von den Lichtquellen auf die Probe fallende Licht sollte zudem eine auf der Betrachtungsfläche konstante Spektralverteilung besitzen, denn die Berücksichtigung einer ortsabhängigen Spektralverteilung bei der Farbberechnung würde sehr aufwendig sein. Durch Reflexion an den Wänden der Kabine wird aber zusätzliches reflektiertes Licht (3.2, 3.3 in Figur 1 b) auf die Probe geleitet, welches durch die spektralen Reflexionseigenschaften der Wände in eine andere spektrale Verteilung als die der direkten Strahlung 3.1 überführt wird. Dieses überlagert sich mit lokal unterschiedlicher Verteilung dem direkten Licht, z.B. nahe den Wänden mit stärkerem Einfluss als in der Bildmitte. Zudem sind oft auch Reflektoren R1 - R3 hinter den Leuchtstoffröhren angebracht, um zusätzliches Licht auf die Probe zu lenken. Auch diese Maßnahme führt zu lokal unterschiedlichen Spektralanteilen durch die wellenlängenabhängige Reflexion der Reflektoren. Die Beleuchtung 3 der Probe ist daher weder spektral völlig homogen noch ist eine eindeutig definierte Beleuchtungsgeometrie wie in Messgeräten nachgebildet.

Um die Verteilung der Helligkeit im Probenbereich zu verbessern, werden auch Streuplatten P vor den Lichtquellen angeordnet. Diese bestehen oft aus Kunststoffen mit bestimmter Riffelung. Auf Grund der wellenlängenabhängigen Lichtbrechung an Kunststoffen ist dann mit winkelabhängiger Spektralverteilung der durchgelassenen Lichtstrahlung zu rechnen.

## 1.2. Einfluss der Raumbeleuchtung

Bei der Abmusterung von Farben in der Praxis ist es nicht wünschenswert, die Betrachtungskabine und den Bildschirm in einem dunklen Raum aufzubauen. In industriellen Anwendungen wird normalerweise eine Raumbeleuchtung vorgesehen, welche auch ein Arbeiten neben den Geräten der Farbabmusterung ermöglicht. Raumlicht fällt dann aber auch zusätzlich in die Betrachtungskabine ein und beleuchtet auch die daneben angeordnete Bildschirmoberfläche. In der Kabine verändert dies die Wahrnehmung der originalen Farben. Um den Fremdlichtanteil klein zu halten, werden daher die Betrachtungskabinen oft mit sehr großer Tiefe aufgebaut. Dies hat den Nachteil, dass ein "höhlenartiger" Betrachtungseindruck entsteht.

Auf dem Bildschirm bewirkt das zusätzlich durch die Reflexion der Bildoberfläche durch Raumlicht reflektierte Licht eine Verminderung des Bildkontrastes. Zudem ist zu beachten, dass die spektrale Zusammensetzung des Raumlichtes für die Berechnung der zu reproduzierenden Farbe bislang nicht berücksichtigt wird.

## 1.3 Mangelnde Gleichförmigkeit der Ausleuchtung

Da die Bereiche auf der Auflagefläche der Farbproben in der Betrachtungskabine insbesondere in vertikaler Richtung unterschiedlich weit von den Lichtquellen entfernt sind, verändert sich die Beleuchtungsstärke auf der Auflagefläche ortsabhängig. Andererseits ist auch die Verteilung der Leuchtdichte auf einem Bildschirm nicht völlig konstant sondern ändert sich lokal. Typisch können Unterschiede der Beleuchtung im Betrachtungskasten im Bereich von 10% bis 20% auftreten. Auch bei Bildschirmen liegen typische Unterschiede der Leuchtdichte von der Bildmitte bis zum Bildrand in diesem Bereich, jedoch ist ihre Verteilung unterschiedlich von der Verteilung in der Betrachtungskabine. Wie schon unter 1.1. erwähnt, werden zur Verbesserung der Gleichförmigkeit Lichtstreuplatten P im Strahlengang eingesetzt und es wird auch eine Betrachtungskabine angeboten, welche im Bodenbereich eine zusätzliche Lichtquelle verwendet, um den Abfall der Beleuchtungsstärke in vertikaler Richtung zu vermindern. Für Bildschirme werden von verschiedenen Firmen Verfahren angeboten, um die Leuchtdichte über dem Bildschirm zu homogenisieren. Mit diesen Verfahren wird eine Reduktion der Unterschiede erreicht, jedoch zeigt die Praxis, dass immer noch sichtbare Helligkeitsunterschiede zwischen den Farben der Originale im Betrachtungskasten und der Reproduktion auf dem Bildschirm vorhanden sind, da nicht erreicht wird, die Leuchtdichteverteilung des Bildschirmes und die Beleuchtungsstärke in der Betrachtungskabine exakt aneinander anzupassen.

### 1.4 Umfeld und Farberscheinung

Ein weiteres Problem, weshalb meistens keine gleich aussehenden Farben erzielt werden, kommt durch die Effekte der Farberscheinung zustande. Die visuelle Wahrnehmung einer Farbe durch einen menschlichen Beobachter hängt von der Verteilung von Farben im direkten Umfeld einer betrachteten Probe und von der Beleuchtung im weiteren Umfeld einer Szene ab. So verändert sich die Wahrnehmung der Helligkeit einer Farbe drastisch mit der Helligkeit der Umgebung und es verschiebt sich die Wahrnehmung des Farbtons mit den Farben der Umgebung in Richtung der Gegenfarben. Diese Effekte der sogenannten Farberscheinung sind ausführlich z.B. in [1,2] beschrieben. Angenähert können die Verschiebungen der Farbwahrnehmung mit dem Umfeld durch Modelle beschrieben werden. Eines dieser Modelle ist z.B. in einer Arbeitsgruppe der internationalen Beleuchtungskommission CIE in dem Bericht CIE-159-2004 erarbeitet und beschrieben. Wesentlich in die Erscheinung einer Farbe geht der sogenannte Adaptationszustand des Auges ein. Parameter, die die visuelle Erscheinung einer Farbe im Gehirn eines Menschen steuern, sind von der Helligkeit und Farbverteilung der Farben im Gesichtsfeld abhängig, und das visuelle System des Menschen stellt sich innerhalb eines Zeitraumes von ca. 2 min auf diese ein und adaptiert sich an diese.

Die Effekte der Farbwahrnehmung führen nun bei der in den Figuren 1a und 1b skizzierten Abmusterungsanordnung dazu, dass die Farben der Originalvorlage unter der Beleuchtung der Betrachtungskabine im Gesichtsfeld eines menschlichen Beobachters in anderer Weise erscheinen, als dies nach einem Wechsel der Betrachtungsrichtung auf den Bildschirm mit anderer Umgebung geschieht. Der Adaptationszustand des Auges verändert sich, wenn der menschlicher Beobachter längere Zeit in eine der Richtungen schaut. Da die Gesamtheit aller Farben und Helligkeiten der Beleuchtung im Gesichtsfeld des menschliche Beobachters beim Hin- und Herschauen im Vergleich normalerweise nicht übereinstimmen, erscheinen auch die Farben auf dem Bildschirm neben der Kabine anders als die originalen Farben in der Betrachtungskabine. Für die Aufstellung des Bildschirmes wird üblicherweise zumindest eine Umgebungshelligkeit vorgesehen, die etwa 20% der Helligkeit des maximalen Weißwertes in der Bildwiedergabe entspricht. In der Betrachtungskabine aber ist die direkte Umgebung einer Farbvorlage mit derselben Helligkeit beleuchtet wie die Probe selbst.

Durch die Anwendung eines Farberscheinungsmodells, wie z.B. aus der CIE159-2004 bekannt, kann zwar versucht werden, durch eine Vorverzerrung der elektronisch reproduzierten Farben diese Unterschiede zu kompensieren, die Praxis zeigt aber, dass die verfügbaren Verfahren nicht ausreichen, um eine genaue Übereinstimmung aller Farben durch Berechnung zu erreichen. Hinzu kommt, dass die Beleuchtung der Umgebung und des Hintergrundes lokal auch sehr stark schwankt und mit einer Messtechnik nur schwer zu erfassen und damit auch nicht genau eingerechnet werden kann.

### 1.5 Genauigkeit des Farbvergleiches

Als weiterer Punkt ist zu beachten, dass durch die räumlich getrennte Anordnung von originalen und reproduzierten Farben ein Vergleich der Übereinstimmung nur angenähert möglich ist, da auch bei schnellem Wechsel der Betrachtung von Original und Reproduktion der Farbvergleich nur über das Farberinnerungsvermögen des menschlichen Beobachters möglich ist. In der Praxis können Farbunterschiede bei dieser Art des Vergleiches nur bis auf Unterschiede von CIE $\Delta$E2000 = 2 bis 4 erkannt werden (CIE $\Delta$E2000 ist das von der CIE empfohlene Maß für Farbabstände). Für viele Anwendungen ist diese Genauigkeit nicht ausreichend.

Es wird heute angestrebt, weltweit Farbbilder und Farbproben elektronisch zu übermitteln und für professionelle Anwendungen und für Design-Prozesse am Bildschirm zu bearbeiten. Ein Vergleich der Ergebnisse solcher Bearbeitungsprozesse ist nur möglich, wenn sichergestellt ist, dass auf dem jeweiligen Bildschirm eine originale Farbprobe genau, d.h. bis auf Farbunterschiede von $\Delta$E2000 < 1.0, definiert werden kann. Selbst Farbunterschiede von kleiner als $\Delta$E2000 = 1 sind dann noch deutlich sichtbar, wenn sie aneinander grenzen, was in der Praxis beim Zusammenfügen von Farbflächen häufig vorkommen kann, z.B. dann, wenn Teilprodukte aus verschiedenen Produktionslinien zusammengefügt werden sollen.

### 1.6 Beobachtereigenschaften

Ein Farbvergleich von originaler und reproduzierter Farbe führt auch dann oft zu unterschiedlichen Eindrücken, wenn die spektralen Empfindlichkeitskurven der Zapfenarten des menschlichen Beobachters systematisch von denen abweichen, die durch die Normbeobachter nach CIE definiert sind. In der Praxis sind Unterschiede zwischen verschiedenen Beobachtern und den definierten Normbeobachtern eher die Regel. Hinzu kommt, dass die für das Farbensehen eines Menschen im Auge wirksamen Spektralwertkurven sich mit dem Alter des Menschen verändern. Da weiterhin die Dichte der Zapfen in der Netzhaut vom Mittelpunkt der größten Dichte an unterschiedlich stark abnimmt, verändern sich die an das Gehirn weitergeleiteten Farbsignale mit der überdeckten Farbfläche. Dies wird in der Technik durch den sogenannten Beobachterwinkel beschrieben, unter dem eine Farbfläche in das Auge abgebildet wird. Für die Normbeobachter sind dazu 2° und 10° ausgewählt worden.

Bei der technischen Farbreproduktion muss eine Entscheidung für einen dieser beiden Beobachter getroffen werden. Für großflächige Farbproben wird der 10°-Normbeobachter eingesetzt, für kleine Farbflächen der 2°- Normbeobachter. Eine exakte Berücksichtigung aller möglichen Beobachterwinkel ist damit aber nicht möglich.

Grundsätzlich ist eine Anpassung für jeden individuellen, menschlichen Beobachter auch in Abhängigkeit des Alters möglich. Eine Reproduktion ist dann aber nur für diesen einen Beobachter optimierbar.

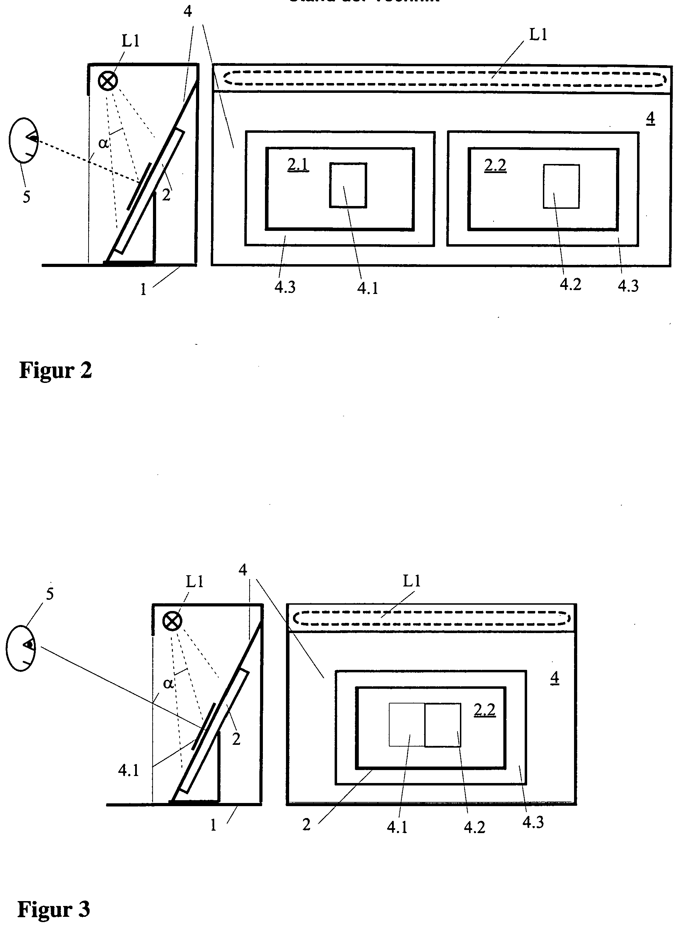

In der Patentanmeldung DE 101 21 984.9, "Verfahren und Vorrichtung zur visuellen optimierten Darstellung von Farbbildern auf Bildschirmen und/oder deren Vergleich mit Originalen oder gedruckten Bildern", ist ein erster Schritt offenbart, vorstehend genannte Probleme zu lösen. Der Vorschlag ist in **Figur 2** skizziert. Bei diesem Vorschlag wird eine einzige Kabine 1 verwendet, welche die Betrachtungsfläche 4 des Originals und den Bildschirm 2 vereinigt. Es wird dabei vorgeschlagen, die Betrachtungsfläche 4 für eine originale Farbprobe 4.1 zusammen mit der Fläche eines Bildschirmes 2.2 und der darauf abgebildeten Reproduktion 4.2 in einer Ebene anzuordnen und die farbliche Umgebung für beide gleich zu gestalten. In der Betrachtungsebene 4 wird daher ein der Bildschirmfläche gleicher Betrachtungsbereich 2.1 definiert. Auch wird vorgeschlagen, je einen weißen Rahmen 4.3 um die Betrachtungsproben beziehungsweise den Bildschirm anzuordnen und darum eine neutral graue Umgebungsfläche zu schaffen. Die Gesamtfläche wird möglichst gleichförmig mit einer oder mehreren stabförmigen Lichtquellen L1-L3 beleuchtet. Das Licht 3 trifft unter angenähert 45 Grad auf die Betrachtung- und Bildschirmfläche, und es wird angenommen, dass ein menschlicher Beobachter 5 angenähert senkrecht auf die Farbprobe und die Bildschirmfläche schaut, also unter einem Winkel $\alpha$ = 45 Grad zur Beleuchtung. Damit werden zwei der vorstehend genannten Problempunkte aus 1.1 und 1.4 gelöst: Die Geometrie der Beleuchtung ist angenähert als 45/0 Grad Geometrie ausgeführt und die originale Farbprobe und die reproduzierte Farbe auf dem Bildschirm sind in der gleichen Umgebung unter gleicher Beleuchtung angeordnet und führen damit auch zu der derselben Farberscheinung.

In der Patentanmeldung DE 101 21 984.9 wird außerdem vorgeschlagen, die Helligkeit einer weißen Farbe, einem Referenzweiß, exakt an die Helligkeit der jeweiligen originalen Farbprobe und der Reproduktion unter der gemeinsamen Beleuchtung anzugleichen. Die weißen Rahmen um die Betrachtungsfläche und um den Bildschirm dienen zur Stabilisierung des Adaptationszustandes des Auges.

Als Stand der Technik wird noch auf die Druckschriften DE 101 21 984 A1, US 5 634 117 A, DE 10 2005 028 487 A1, US 4 106 846 A, EP 1 889 721 A1, WO 01/28231, US 5 638 117 A verwiesen.

## 2. Aufgabe der Erfindung und Zusammenfassung des Erfindungsvorschlages

Die Aufgabe der Erfindung besteht darin, Lösungen vorzuschlagen, die die unter 1.1 bis 1.5 genannten Probleme vermeiden, und eine für den Beobachter visuell garantiert gleiche Reproduktion von Farben auf dem Bildschirm im Vergleich mit originalen Farben unter einer definierten Beleuchtung sicherzustellen.

Diese Aufgabe wird durch die Merkmale der unabhängigen Patentansprüche gelöst. Vorteilhafte Weiterbildungen der Erfindung sind Gegenstand untergeordneter Ansprüche.

Es wird vorgeschlagen, ein Verfahren zur Bildschirmkalibrierung für die originalgetreue Reproduktion von Oberflächenfarben, deren spektrale Reflexionsverteilung ausgemessen und bekannt ist, auf einem Bildschirm, der unter einfallendem Licht von mindestens einer Lichtquelle mit Einfallswinkeln des Lichtes außerhalb des Glanzwinkels und mit bekannten spektralen Lichtverteilungen betrieben wird, wobei der Bildschirm durch Einstellung von Parametern mit Hilfe von Software und elektronischer Steuerung in jedem Teilbereich des Bildschirms beeinflussbar ist, dahingehend zu verbessern, dass in jedem Teilbereich des Bildschirms der reproduzierte Farbeindruck des Bildschirms an den Farbeindruck eines Originals angepasst wird, indem das Original unmittelbar angrenzend auf der Bildschirmoberfläche mit den Bildschirmfarben verglichen wird und die Bildschirmparameter so lange verändert werden, bis der Farbeindruck des Originals und des Bildschirms an der jeweils betrachteten Bildschirmteilfläche für einen Beobachter, betrachtet aus einem vorbestimmten Beobachterwinkel, identisch erscheint, und die vorgenommenen Einstellungen in einem Bildschirmprofil hinterlegt werden, wobei eine Maske vor dem Bildschirm verwendet wird, die eine über die gesamte Bildfläche verteilte Anzahl von Fenstern enthält, wobei jedes Fenster teilweise, vorzugsweise zur Hälfte, mit einem Original einer Oberflächenfarbe abgedeckt ist und hinter jeder der nicht abgedeckten Fensterteilflächen auf dem Bildschirm die der jeweiligen Oberflächenfarbe zugeordnete Farbreproduktion erzeugt wird, und die Software in einem den Bildschirm ansteuernden Computer abläuft, mit der die Helligkeit der reproduzierten Farben in jedem Fenster verändert und so eingestellt werden kann, sodass für den Beobachter kein Helligkeitsunterschied zwischen originaler- und reproduzierter Farbe unter der Beleuchtung des Bildschirmes mehr besteht, und die Helligkeitswerte als Stützpunkte gespeichert werden und daraus ein Helligkeitsprofil erstellt wird, welches die absolute Helligkeit für jede in einem Bildpunkt reproduzierte Farbe steuert, und der Helligkeitsabgleich und die Ermittlung der Stützpunkte für das Helligkeitsprofil des Bildschirmes dadurch automatisch durchgeführt wird, dass als Beobachter eine Kamera das Bild der Maske aufnimmt, wobei für jedes Fenster der Maske der Bereich der Oberflächenfarben und der durch den Bildschirm reproduzierten Farben selektiert und innerhalb dieser Bereiche gemessene und gemittelte Farbsignale erzeugt werden, diese Farbsignale einem Computer zugeführt werden, der den Monitor steuert und dabei iterativ die Helligkeit der Farbsignale so verändert werden, bis in jedem Fenster die durch die Oberflächenfarbe und ihre Reproduktion erzeugten Farbsignale gleich groß werden.

Hierbei wird der Bildschirm in einer farblich neutral gestalteten Fläche angeordnet, diese Fläche unter angenähert 45 Grad durch eine, vorzugsweise stabförmige, Lichtquelle beleuchtet und originale Farbproben auf der Bildschirmfläche angeordnet, so dass die reproduzierten Farben auf dem Bildschirm im direkten Vergleich neben beziehungsweise anstoßend an die originalen Farben für einen menschlichen Beobachter zur gleichen Farbwahrnehmung führen. Dadurch wird erreicht, dass die exakte spektrale Lichtverteilung am Ort der Farbproben ortsabhängig ausgemessen wird und damit die originalen Farbwerte berechnet werden und diese auf dem Bildschirm unter Einbezug der gemessenen Lichtverteilung reproduziert werden, wobei sowohl die Hauptlichtquelle als auch zusätzliches von außen auftreffendes Fremdlicht mit seiner jeweiligen spektralen Verteilung berücksichtigt wird. Außerdem können für die Farbberechnung variable Grundspektralwertkurven von Beobachtern benutzt werden, die einerseits den menschlichen Benutzern besser angepasst sind als die des Normbeobachters und andererseits von der mittleren betrachteten Farbflächengröße beziehungsweise dem zugeordneten Beobachterwinkel einer zusammenhängenden Farbfläche abhängig gemacht werden, wobei auch die Bildschirmkalibrierung variabel in Abhängigkeit von den jeweils benutzten Grundspektralwertkurven berechnet wird.

Weiterhin wird auch vorgeschlagen, zur Verbesserung der Gleichförmigkeit der Beleuchtung auf der Bildfläche mechanische Masken im Lichtstrahlengang anzuordnen, die in bestimmten berechneten Formen das Licht von einer oder mehreren Lichtquellen ortsabhängig blockieren oder durchlassen.

In einer Ausführungsform des Verfahrens ist vorgesehen, dass jedes Fenster zur Hälfte mit einem Original einer Oberflächenfarbe abgedeckt ist.

In einer weiteren Ausführungsform des Verfahrens ist vorgesehen, dass die Kamera mit einem optischen Filter ausgestattet ist, welches zusammen mit der spektralen Empfindlichkeit der Kamera eine spektrale Gesamtempfindlichkeit der Bildaufnahme ergibt, die einer spektralen Hellempfindlichkeit V□ eines ausgewählten Beobachters entspricht.

In einer weiteren Ausführungsform des Verfahrens ist vorgesehen, dass die durch Reflexion des Lichtes an der Bildschirmoberfläche in Richtung des Beobachters auftretenden Farbreize in ihrer spektralen Verteilung und ihrer Intensität ausgemessen werden, diese Farbreize als reflektierte Farbwerte des Bildschirms für den Beobachter beschrieben werden und auf dem Bildschirm nur die Differenzen von Farbwerten originaler Farben und den reflektierten Farbwerten reproduziert werden.

In einer weiteren Ausführungsform des Verfahrens ist vorgesehen, dass die durch Reflexion des Lichtes an der Bildschirmoberfläche in Richtung des Beobachters auftretenden Farbreize bei der Vermessung des Bildschirmprofils bei eingeschalteter Beleuchtung direkt mit gemessen und dann in dem oder einem gespeicherten Bildschirmprofil enthalten sind.

In einer weiteren Ausführungsform des Verfahrens ist vorgesehen, dass der Bildschirm in einer Kabine angeordnet ist, die horizontale Bildschirmmitte im vertikalen Schnitt unter 45 Grad beleuchtet wird, indem die Beleuchtung durch ausgedehnte stabförmige Lichtquellen ausgeführt wird, die oberhalb oder unterhalb des Bildschirmes montiert sind, und eine Homogenisierung der Beleuchtungsverteilung auf der Bildfläche erreicht wird, indem Teillichtabdeckungen (=Masken) im Strahlengang des Lichtes von den Lichtquellen bis zum Bildschirm angebracht werden, welche aufgrund ihrer Formgebung Anteile der Lichtstrahlen von den Lichtquellen auf dem Wege zum Bildschirm orts- und/oder winkelabhängig blockieren oder hindurchlassen.

In einer weiteren Ausführungsform des Verfahrens ist vorgesehen, dass die spektrale Verteilung der Beleuchtung mit Hilfe eines unmittelbar am Bildschirm angeordneten Spektrometers gemessen wird und das Ergebnis der spektralen Lichtverteilung bei Erstellung des Bildschirmprofils berücksichtigt wird.

In einer weiteren Ausführungsform des Verfahrens ist vorgesehen, dass der Bildschirm unter einer internen Lichtquelle in einer Kabine betrieben wird und zusätzlich von außen auf die Betrachtungsfläche einfallendes Licht mit gleicher oder anderer spektraler Verteilung in die Berechnung der Reproduktion der Farbe einbezogen wird, wobei auch die lokale Farbverteilung getrennt für das von außen einfallende Licht und das von der internen Lichtquelle stammende Licht ermittelt wird und die Farbreproduktion als Summe aus den Farbwerten unter der internen und externen Beleuchtung dargestellt werden.

In einer weiteren Ausführungsform des Verfahrens ist vorgesehen, dass die Helligkeitsverteilung des von außen einfallenden Lichtes bei abgeschalteter interner Lichtquelle über Sensoren, die auf der Betrachtungsfläche in der Kabine verteilt sind, gemessen wird.

In einer weiteren Ausführungsform des Verfahrens ist vorgesehen, dass zur Berechnung der Farben aus den spektralen Reflexionseigenschaften von Originalfarben und zur Berechnung der Farbreproduktion über den Bildschirm, von der Größe einer Farbfläche und ihrem daraus folgenden Beobachterwinkel abhängige variable Grundspektralwertkurven benutzt werden, und ein Farbbild dazu in Bereiche annähernd gleicher oder im Mittel gleich erscheinender Farben segmentiert wird und der jeweils zugeordnete Beobachterwinkel für ein Segment aus den jeweils mittleren Größen eines Farbsegmentes in einem Bild ermittelt wird.

In einer weiteren Ausführungsform des Verfahrens ist vorgesehen, dass für die Farbreproduktion mit unterschiedlichen Beobachtern eine Datenbank aufgebaut wird, in der analytisch beschrieben oder in Stufen als Funktion des Beobachterwinkels die Grundspektralwertkurven von verschiedenen Beobachtern gespeichert sind, Farbwerte von Originalfarben aus ihrer spektralen Reflexion für die variablen Grundspektralwertkurven gebildet werden, die Bildschirmfarben aus ihrer spektralen Strahlungsverteilung auf dem Bildschirm beschrieben und daraus Farbwerte für den Aufbau von Bildschirmprofilen in Abhängigkeit von Beobachtern und Beobachterwinkeln berechnet werden, diese Bildschirmprofile in Echtzeitverarbeitung für die Farbreproduktion von Bildern oder als vorberechnete Profile in einer Datenbank abgelegt und in Abhängigkeit des ausgewählten Beobachters und Beobachterwinkels aufgerufen werden.

Weiterhin wird in Anspruch 12 die Verwendung einer Vorrichtung zur Reproduktion eines Farbeindruckes eines Originals bei einem Beobachter vorgeschlagen. Bei den heute üblichen Verfahren zum Softproof wird versucht, die Beleuchtungsverteilung auf der Betrachtungsfläche des Originales und die Verteilung der Leuchtdichte auf dem Bildschirm jeweils so zu gestalten beziehungsweise zu korrigieren, dass möglichst gute Gleichförmigkeit erreicht wird. In der Praxis stößt dies aber auf große technische Schwierigkeiten und eine Gleichförmigkeit im Bereich von 1 % der mittleren Helligkeit wird nicht erreicht. Um nicht sichtbare Unterschiede der Reproduktion zu den Originalfarben zu erreichen, ist jedoch eine Genauigkeit von 1 % erforderlich.

Im Gegensatz dazu wird nun in der vorgeschlagenen Erfindung die Bildschirmhelligkeit exakt an eine vorhandene ortsabhängige Beleuchtung angepasst und damit eine hohe Genauigkeit von direkt aneinandergrenzenden Originalfarben und ihrer Reproduktion von besser als 1% der Helligkeitsunterschiede erreicht, wobei über die gesamte Bildfläche lokale Helligkeitsunterschiede von größer als 1 % zugelassen sind.

Weiterhin wird ein Verfahren zur Darstellung eines Farbeindruckes eines Originals an einen entfernten Beobachter durch eine Farbreproduktion auf einem Bildschirm beschrieben, wobei:

- vom Original unter Berücksichtigung gegebener Beleuchtungsverhältnisse eine objektspezifische spektrale Reflexionsverteilung bestimmt wird,
- die objektspezifische spektrale Reflexionsverteilung an den entfernten Beobachter übertragen wird,
- und unter Berücksichtigung eines gegebenen Bildschirmprofils, gegebener Beleuchtungsverhältnisse an einem Bildschirm, und eines gegebenen spektralen Empfindlichkeitsprofils des entfernten Beobachters, auf diesem Bildschirm der Farbeindruck des Originals für den Beobachter unter den gegebenen Lichtverhältnissen am Bildschirm reproduziert wird.

Außerdem wird eine Vorrichtung zur Reproduktion eines Farbeindruckes eines Originals bei einem Beobachter beschrieben, aufweisend einen Bildschirm zur Farbreproduktion, einen Computer mit Software zur Steuerung des Bildschirmes und eine Beleuchtungsvorrichtung für die definierte Beleuchtung der Umgebung des Bildschirms, mit den folgenden Merkmalen:

- der Bildschirm ist in einer Kabine oder einem Raum angeordnet,
- die Beleuchtung wird durch ausgedehnte stabförmige Lichtquellen ausgeführt, die oberhalb oder unterhalb des Bildschirmes derart montiert sind, so dass die horizontale Bildschirmmitte im vertikalen Schnitt unter 45 Grad beleuchtet wird,
- und eine Homogenisierung der Beleuchtungsverteilung auf der Bildfläche wird erreicht, indem Teillichtabdeckungen (=Lichtmasken) im Strahlengang des Lichtes von den Lichtquellen bis zum Bildschirm angeordnet sind, welche aufgrund ihrer Formgebung Anteile der Lichtstrahlen von den Lichtquellen auf dem Wege zum Bildschirm orts- und/oder winkelabhängig blockieren oder hindurchlassen.

## 3. Besondere Ausführung des Erfindungsgedankens und Beispiele

Die Erfindung wird nachfolgend anhand der Figuren 3 bis 5 ausführlicher erläutert. Für die Erläuterung werden Farbwerte beispielhaft durch XYZ-Werte und Grundspektralwertkurven durch $x(\lambda)$, $y(\lambda)$ und $z(\lambda)$ beschrieben, die nicht unbedingt den Normfarbwerten beziehungsweise den Normspektralwertkurven entsprechen. Dies bedeutet keine Einschränkung, da Farbwerte beziehungsweise Grundspektralwertkurven nach der Gesetzmäßigkeit der Farbmetrik durch beliebige lineare Kombinationen von Farbmischkurven, die für einen menschlichen Beobachter ermittelt wurden, dargestellt werden können.

Die Erfindung geht ferner davon aus, dass alle zu reproduzierenden Originalfarben durch ihre spektralen Reflexionseigenschaften beschrieben sind. Diese können mit handelsüblichen Spektralphotometern gemessen werden, wenn homogene Farbflächen vorliegen. Für Bilder wird angenommen, dass multispektrale Bildaufnahmen vorliegen, bei denen für jeden Bildpunkt das Spektrum der Reflexion aufgenommener Vorlagen beschrieben ist.

In **Figur** 3 ist ein möglicher Grundaufbau für die Farbreproduktion und die Beleuchtung der Vergleichsprobe nach dem Erfindungsgedanken dargestellt. Das Ziel der Erfindung ist es, eine absolut zuverlässige und jederzeit kontrollierbare Farbwiedergabe auf einem Bildschirm im Vergleich zu originalen Oberflächenfarben unter einer definierten und spektral eindeutig beschriebenen Lichtquelle zu ermöglichen. Dazu wird in einer Betrachtungskabine 1 eine Betrachtungsfläche 4 angeordnet, in die der Bildschirm 2 mit seiner Fläche 2.2 eingepasst ist. Die Betrachtungsfläche 4 wird mit einer vorzugsweise stabförmigen Lichtquelle L1 beleuchtet. Die Länge dieser Lichtquelle L1 überdeckt die gesamte Breite der Betrachtungskabine 1 und wird bewusst länger gewählt als die Bildschirmbreite, damit im Bereich des Bildschirmes in horizontaler Richtung eine möglichst gleichförmige Beleuchtungsstärke erreicht wird. Die Neigung der Betrachtungsfläche 4 ist so gewählt, dass die direkten Strahlen der Lichtquelle unter angenähert 45 Grad auf die Bildmitte auftreffen. Es wird weiterhin angenommen, dass ein menschlicher Beobachter 5 unter normalen Betrachtungsbedingungen senkrecht auf die Bildmitte schaut. Diese Beleuchtung nähert dann den bei der Messung von Farben nach DIN 5033 unter dem Beleuchtungswinkel von 45° und dem Beobachterwinkel von 0 Grad (45/0 Grad) festgelegten Standard an.

Alternativ kann die Erfindung aber auch mit einer flächenförmig ausgedehnten Lichtquelle - dies können einerseits eine oder wenige an sich flächenförmig ausgestaltete Lichtquellen oder es kann andererseits eine Vielzahl von punktförmigen und flächig verteilten Lichtquellen sein - ausgeführt werden. Dann sollte allerdings beachtet werden, dass auch die Messung der Originalfarben eine Messgeometrie aufweisen sollte, welche die gleiche Geometrie der einfallenden Lichtstrahlen benutzt wie sie relativ zur Betrachtungsfläche entstehen, da sonst eine farbgleiche Reproduktion kaum möglich ist. Anwendbar ist auch die Nutzung von LED-Leuchten, die zusätzlich den Vorteil bieten, dass die Gleichförmigkeit der örtliche Verteilung der Beleuchtung durch gezielte Steuerung der Helligkeit der LED-Leuchten verbessert werden kann.

Die aktive Fläche 2.2 des Bildschirmes wird beispielhaft im Bereich der Beleuchtung mit einer farblich gleichförmigen Fläche 4 umgeben. Alternativ kann ein weißer Rahmen um die Bildfläche angeordnet werden, wie es in der Patentanmeldung DE 101 21 984.9 beschrieben und begründet ist. Im weiteren Umfeld ist es zweckmäßig, einen Grauton bei einer spektral möglichst unabhängigen, neutralen Reflexion von etwa 20% vorzusehen. Bei dieser Reflexion von 20% empfindet ein menschlicher Beobachter etwa eine Helligkeit von 50% von der einer weißen Fläche mit der Reflexion von angenähert 100%, dies entspricht also einer mittleren Bildhelligkeit im Umfeld. Der weiße Rahmen 4.3 hat sich als zweckmäßig erwiesen, da er den Adaptationszustand des Auges und damit die Farbwahrnehmung einer Bilddarstellung stabilisiert und mit seinen Farbwerten Xw, Yw und Zw (der Index w steht für weiss) unter der Beleuchtung einer Bezugslichtart definiert. Der Rahmen sollte möglichst mit einer weißen und matten Oberfläche von angenähert konstanter spektraler Reflexion im sichtbaren Bereich beschichtet sein, und er sollte keine optischen Aufheller enthalten.

Für einen Farbvergleich kann eine originale Probe 4.1 entweder im direkten Umfeld des Bildschirmes oder auf dem Bildschirm positioniert werden. Im letzteren Fall ist ein bester Farbvergleich möglich, wenn eine Reproduktion 4.2 der Farbe auf dem Bildschirm direkt an die originale Probe angrenzt.

Für die Reproduktion müssen zunächst die Farbwerte einer Probe bestimmt werden. Dazu muss die spektrale Lichtverteilung $S_\lambda$ am Ort der Probe mit einem Spektroradiometer ausgemessen werden. Bei Farbverteilungen in Bildern empfiehlt es sich, die in dem Patent DE 41 19 489 C2 beschriebene Multispektraltechnik einzusetzen, um für jeden Bildpunkt eines Bildes die Reflexionsverteilung $\beta(\lambda)$ zu ermitteln. Mit Hilfe der Gl.1 können dann die Farbwerte XYZ beziehungsweise die in Richtung des Beobachters reflektierten Farbreize berechnet werden.

Die so ermittelten Farbwerte des Bildes der Farbprobe 4.1 werden über den Bildschirm mit Hilfe der bekannten Verfahren zur Steuerung von Bildschirmen elektronisch derart reproduziert, dass auf dem Bildschirm dieselben Farbwerte XYZ im Farbfeld 4.2 erscheinen. Wenn dies unter Berücksichtigung der farbmetrischen Eigenschaften des Beobachters mit ausreichender Genauigkeit der Fall ist, dann wird die elektronisch reproduzierte Farbe in der Betrachtungsvorrichtung durch einen Beobachter genau so wahrgenommen wie die Originalprobe, welche direkt an das Feld der reproduzierten Farbe angrenzt.

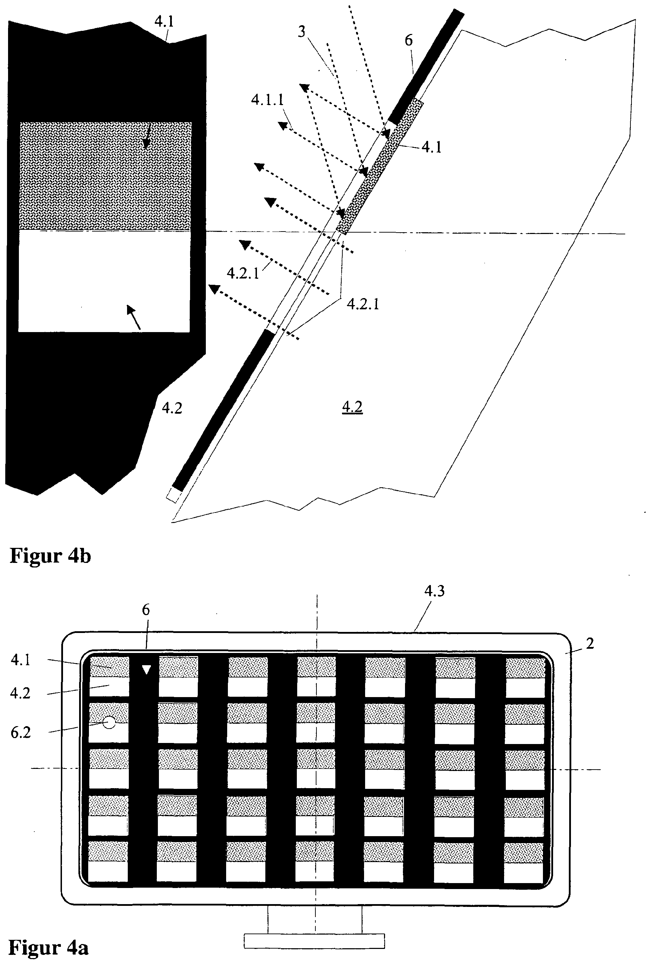

Allerdings sind zunächst die Farbwerte der Probe nur als relative Werte bekannt und es muss noch ermittelt werden, mit welcher absoluten Helligkeit diese auf dem Bildschirm 2 reproduziert werden müssen. Dazu wird erfindungsgemäß eine visuelle Vergleichsmethode angewendet, mit der ein Helligkeitsprofil erstellt wird. Entsprechend den **Figuren 4a und 4b** wird dazu eine Maske 6 vor dem Bildschirm angebracht, welche eine Anzahl von regelmäßig angeordneten Fenstern mit Mittelpunkten 6.2 enthalten. Die Mittelpunkte der Fenster bilden ein gleichförmiges Raster über der Bildfläche. Hinter jedem Fenster ist jeweils eine physikalische Testfarbenfläche 4.1, z.B. eine homogene bedruckte Papierprobe, angebracht, welche jeweils z.B. die obere Hälfte eines Fensters abdeckt. Die untere Hälfte ist offen und hinter diesen Öffnungen werden die Farben 4.2 durch den Bildschirm reproduziert. Die reproduzierten Farben stoßen damit direkt an ihre Originale an und können bestmöglich verglichen werden.

Erfindungsgemäß wird zur Ermittlung des Helligkeitsprofils eine Software benutzt, mit der die Helligkeit jeder reproduzierten Farbe in einem Fenster individuell eingestellt werden kann. Diese Einstellung wird z.B. manuell über ein getrenntes Bildschirmmenü eines Computers durchgeführt, der den Bildschirm 2 zur Farbdarstellung steuert. Die von jeder Testfarbe reflektierte Strahlung 4.1.1 der Originalfarbe 4.1 und die direkt räumlich anschließende Strahlung 4.2.1 des Bildschirmes führen zu Farbreizen, die sich im Auge des menschlichen Beobachters vor dem Bildschirm mit bestmöglicher Empfindlichkeit vergleichen lassen. Visuell ist damit ein empfindlicher Abgleich der Helligkeit in jedem Fenster möglich. Die Helligkeitswerte in der Bildmitte jedes Fensters nach dem erfolgten Abgleich werden dann als Raster über der Bildschirmfläche gespeichert. Eine anschließende zweidimensionale Interpolation realisiert ein Helligkeitsprofil über dem Bildschirm, welches als Referenz ortsabhängig in die zu reproduzierenden Farben eingerechnet wird und damit eine exakte Reproduktion auch der absoluten Helligkeit der Farben in jedem Bildpunkt garantiert. Dabei ist vorausgesetzt, dass sich die Helligkeit auf dem Bildschirm durch die Beleuchtung nur stetig und nicht sprunghaft ändert.

Für die Anwendung in der Praxis ist der visuelle Abgleich für alle Rasterpunkte beziehungsweise Fenster aufwendig. Erfindungsgemäß wird daher alternativ vorgeschlagen, den Abgleich mit Hilfe einer Kameratechnik zu automatisieren. Dazu wird das Bild der Maske 6 mit einer Kamera, welche das Gesamtbild aufnimmt, abgetastet. Die Kamera muss durch geeignete optische Filter unter Berücksichtigung der spektralen Empfindlichkeit des Bildsensors so ausgestattet werden, dass ihre effektive spektrale Empfindlichkeit an die Hellempfindlichkeitskurve $V_\lambda$ des Beobachters angepasst ist. Mit einer Bildverarbeitung werden dann in dem Kamerabild die Bereiche jedes Fensters der Maske mit oberem und unteren Ausschnitt selektiert und darin gemittelte Signale gebildet. Die absolute Größe der Signale über der Bildfläche ist wegen der optische Abbildung und der Homogenität des Bildsensors unzuverlässig. Für die Ermittlung des Helligkeitsprofils sind jedoch nur die relativen Signale zur Originalfarbe notwendig. Dazu wird automatisiert in einem Regelkreis der jeweilige Helligkeitswert hinter jedem Fenster des Bildschirmes durch die Software so gesteuert, dass die durch die Messkamera detektierten Signale für die obere und untere Hälfte jedes Fensters gerade gleich groß werden, also ihre Differenz verschwindet. Die absoluten Signalwerte spielen dann keine Rolle mehr. Die so gefundenen Helligkeitswerte für die Steuerung des Bildschirmes werden gespeichert und für die weitere Anwendung interpoliert.

Die zur Beleuchtung der Originalfarben benutzte Lichtstrahlung trifft auch auf die Oberfläche des Bildschirmes. Ein Teil des auftreffenden Lichtes wird damit zusätzlich zu den Farbwerten Xp, Yp und Zp der Reproduktion in Richtung des Beobachters reflektiert. Um diesen Einfluss zu kompensieren, wird der an der Bildoberfläche reflektierte Anteil radiometrisch vermessen und daraus werden reflektierte Farbwerte Xr, Yr und Zr berechnet. Für eine Reproduktion eines Farbwertes Xp, Yp und Zp werden diese Anteile dann zunächst subtrahiert und nur die Differenz Xr-Xp, Yr-Yp und Zr-Zp wird als Farbe auf dem Bildschirm reproduziert. Für den Beobachter addiert sich dann der an der Bildschirmoberfläche reflektierte Anteil physikalisch zu dem reproduzierten des Bildschirms und ergibt in der Summe die gewünschten Werte der Originalfarbe. Bei dieser Vorgehensweise muss natürlich zur Berechnung der Werte Xr, Yr und Zr das ausgemessene Helligkeitsprofil berücksichtigt werden.

Alternativ zu dem vorstehend beschriebenen Verfahren zur Berücksichtigung von Streulicht kann auch so vorgegangen werden, dass die Bildschirmkalibrierung direkt mit eingeschalteter Beleuchtung und/oder Fremdlicht durchgeführt wird und damit ein Bildschirmprofil erzeugt wird, welches den an der Oberfläche reflektierten Lichtanteil enthält. Dabei muss allerdings darauf geachtet werden, dass die Helligkeit der Beleuchtung dem endgültig geforderten Wert der erzeugten Farben entspricht.

Die an der Bildschirmoberfläche reflektierten Lichtanteile reduzieren den effektiven Bildkontrast, denn die minimalen Farbwerte auf der Bildoberfläche entsprechen dann mindestens dem reflektierten Lichtanteil. Für die Anwendung der Erfindung muss daher darauf geachtet werden, dass ein Bildschirm mit niedriger Oberflächenreflexion benutzt wird.

Praktisch brauchbare Bildschirme besitzen in der hier vorgeschlagenen Beleuchtungsgeometrie Reflexionswerte im Bereich von 0,5 bis 0,6 %, d.h. es sind immer noch Bildkontraste von nahezu 200 möglich, was für eine sehr gute Bildreproduktion ausreicht.

Die Vorteile des erfindungsgemäßen Verfahrens und der erfindungsgemäßen Vorrichtung liegen darin, dass nun originale Farbproben direkt mit den elektronisch reproduzierten Proben verglichen werden können und die Sicherheit darin besteht, dass die Farben originalgetreu reproduziert werden. Statt einzelner Proben können natürlich auch ganze Farbbilder mit der Erfindung reproduziert und verglichen werden, und es wird eine exakte Farbgleichheit erzielt, wenn die Farbwerte im Bild spektral aufgenommen und damit die für die Reproduktion benutzte Lichtquelle L1 mit ihrer spektralen Verteilung genau entsprechend den Formeln in Gl.1 eingerechnet werden kann. Die hier dargestellte Erfindung eignet sich daher besonders für die Wiedergabe und den Vergleich multispektral aufgenommener Bilder, da diese die spektrale Information für jeden Bildpunkt bereitstellen.

Die in der Kabine 1 in Figur 3 angeordnete Betrachtungsfläche 4 mit dem Bildschirm 2 ist im oberen Bereich relativ nahe an der Lichtquelle L1 und im unteren Bereich relativ weit von der Lichtquelle entfernt. Dadurch entstehen Unterschiede der Beleuchtungsstärke am oberen und unteren Rand des Bildschirmes. Visuell kann ein menschlicher Beobachter die Helligkeiten direkt aneinander stoßende Farbflächen sehr empfindlich unterscheiden, Helligkeitsunterschiede über größere Abstände sind dagegen nur sehr unempfindlich wahrnehmbar, da das visuelle System die wahrgenommene Helligkeit nach einem der dritten Wurzel der physikalischen Intensität folgenden Verlauf wahrnimmt. Helligkeitsunterschiede im Bereich von 10 % über der Bildfläche werden daher kaum wahrgenommen. Größere Unterschiede wirken dagegen störend.

Um die Unterschiede der Beleuchtungsstärke auf der Betrachtungsfläche 4 auf ein unmerkliches Maß zu verringern, wird in einer weiteren Ausgestaltung der Erfindung vorgeschlagen, Masken in der Nähe der Lichtquellen im Lichtstrahlengang anzuordnen, mit denen eine ortsabhängige, teilweise Abschattung der Beleuchtung erreicht wird. Damit die Masken die spektrale Lichtverteilung nicht durch ihre spektrale Transmission beeinflussen, wird vorgeschlagen, mechanische Masken mit bestimmten Profilen zu verwenden, die Lichtanteile lokal entweder ganz blockieren oder hindurchlassen.

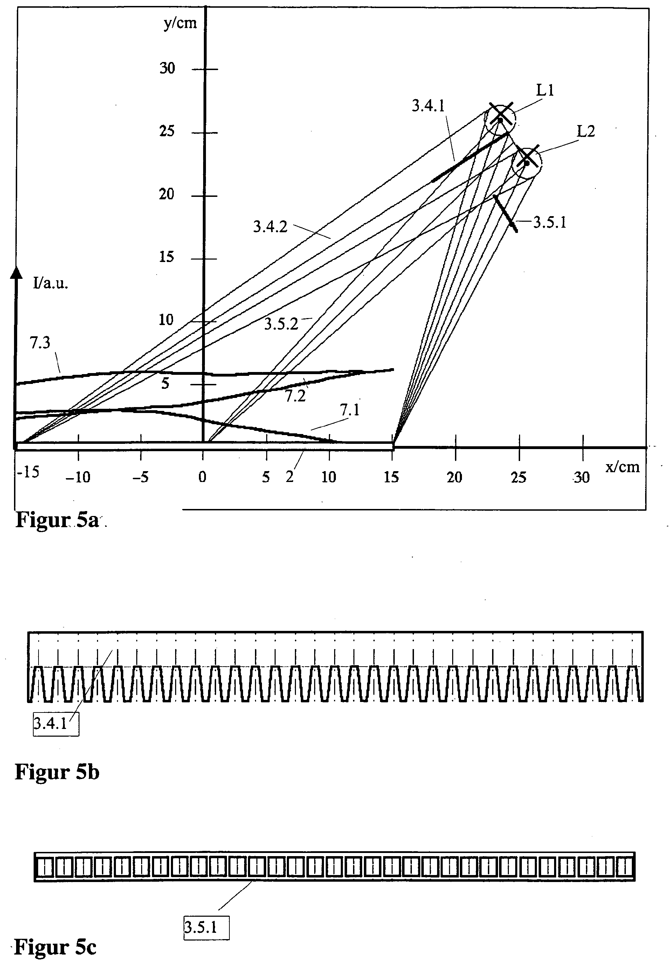

Ein typisches erfindungsgemäßes Beispiel ist in **Figur 5a** skizziert. Dargestellt ist ein Schnitt durch die Oberfläche des Bildschirmes 2 in horizontaler Lage. Die Bemaßung der x- und y-Koordinaten entspricht bei - 15 dem unteren Bildrand, bei +15 dem oberen Bildrand. Ferner sind im x/y-Koordinatensystem beispielhaft als Beleuchtung zwei dicht nebeneinander liegende Leuchtröhren L1 und L2 durch ihren Querschnitt skizziert. Vor den Leuchtstoffröhren sind zwei Lichtmasken 3.4.1 und 3.5.1 angeordnet, die ein Profil entsprechend den in den **Figuren 5b und 5c** dargestellten rechtwinkligen Längsschnitten besitzen.

Die Lichtmasken 3.4.1 und 3.5.1 sind so angeordnet, dass alle Lichtanteile 3.4.2 und 3.5.2 beider Leuchtstoffröhren den unteren Bildrand bei der Lage -15 noch ungehindert erreichen. Für Winkel der Lichtstrahlen in Richtung der Bildmitte bei der Bemaßung 0/0 beziehungsweise dem oberen Bildrand +15 werden die Lichtanteile zunehmend abgeschattet. Für das Licht der Leuchtstoffröhre L1 entsteht dadurch ein Verlauf der Beleuchtungsstärke 7.1, der vertikal in Richtung der zusätzlich links als Abszisse dargestellten Lichtintensität I und horizontal über dem Querschnitt des Bildschirmes aufgetragen ist und am oberen Bildrand den Wert 0 erreicht. Der entsprechende Verlauf durch die Leuchtröhre L2 ist in 7.2 dargestellt. Durch das Zusammenwirken von kurzem Abstand zur Lichtquelle und der berechneten Abschattung durch die Maske 3.5.1 nimmt die Beleuchtungsstärke noch bis zum oberen Bildrand bei +15 zu. Beide Beleuchtungskurven zusammen ergeben den Verlauf 7.3, der am unteren Bildrand einen Abfall von nur noch 10 % zeigt, insgesamt aber zu einem weitgehend gleichförmigen Verlauf der Beleuchtungsstärke führt. Durch eine Veränderung der Maskenprofile kann die beschriebene Verteilung der Beleuchtungsstärke in weiten Grenzen variiert und an praktische Gegebenheiten angepasst werden, ohne dass die spektrale Verteilung der Lichtanteile gestört wird.

Bei der Anwendung der Erfindung in einer Betrachtungskabine sollte allerdings noch berücksichtigt werden, dass auch Raumlicht aus der beleuchteten Umgebung des Arbeitsplatzes auf die Betrachtungsfläche und den Bildschirm auffallen kann. Versuche haben gezeigt, dass für eine typische Büroumgebung, bei einer Helligkeit des Bildschirms in der Größenordnung von 200 cd/m$^2$, für die hellsten Bildbereiche die durch Raumlicht aus der Umgebung verursachte Aufhellung von Originalfarben im Bildschirmbereich bei etwa 5 bis 7% liegt.

Für Lichtanteile von außen in dieser Größenordnung wird erfindungsgemäß vorgeschlagen, die Raumlichtanteile spektral und in ihrer örtlichen Verteilung zu vermessen und in die Reproduktion der Farben einzubeziehen. Dabei wird erfindungsgemäß in gleicher Weise vorgegangen, wie vorstehend für die Berechnung von Farben unter der Hauptlichtquelle beschrieben wurde. Die spektrale Verteilung des einfallenden Lichtes muss zunächst mit einem Radiometer gemessen werden. Radiometer sind zur Zeit noch relativ aufwendig und teuer. Langfristig kann aber auch vorgesehen werden, ein Radiometer im vorderen Bereich der Betrachtungskabine einzubauen und damit kontinuierlich die spektrale Verteilung von einfallendem Fremdlicht zu messen.

Neben der spektralen Verteilung sollte für die Berechnung auch das Helligkeitsprofil durch Raumlicht auf der Bildschirmfläche ermittelt werden. Dazu wird die interne Lichtquelle der Betrachtungskabine abgeschaltet und die Technik mit der Testmaske nach den Figuren 4a und 4b in gleicher Weise durchgeführt, wie vorstehend für die interne Lichtquelle beschrieben. Die Farbwerte der Originalfarben in den Fenstern der Maske werden dann für die spektrale Verteilung des Fremdlichtes berechnet. Mit dem ermittelten Helligkeitsprofil des Fremdlichtes werden die zu reproduzierenden Farbwerte $X_{P,F}$, $Y_{P,F}$ und $Z_{P,F}$ bestimmt. Dabei wird auch erneut die Reflexion von Fremdlicht an der Bildschirmoberfläche berücksichtigt. Werden anschließend die berechneten Werte auf dem Bildschirm reproduziert, dann erscheinen die Originalfarben identisch mit den reproduzierten Farben.

Die Reproduktion mit eingeschalteter interner Beleuchtung 3 benutzt dann das Superpositionsprinzip, wobei vorausgesetzt ist, dass das Bildschirmprofil eine entsprechende Linearisierung der Darstellung von Farbwerten bereitstellt, d.h. es werden die Farbwerte $X_P + X_{P,F}$, $Y_P + Y_{P,F}$ und $Z_P + Z_{P,F}$ auf dem Bildschirm dargestellt.

Das vorstehend beschriebene erfindungsgemäße Verfahren zur Farbreproduktion ist bereits in einem Labormodell erfolgreich realisiert worden und ermöglicht eine originalgetreue Reproduktion, solange keine stärkeren Fremdlichtanteile direkt senkrecht auf die Bildschirmfläche auftreffen und Glanzeffekte verursachen. Auf die Vermeidung von Glanzeffekten durch Fremdlicht aus der Umgebung des Arbeitsplatzes muss daher nach wie vor geachtet werden.

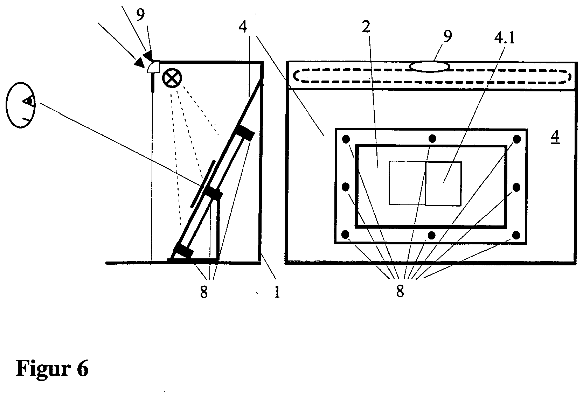

Um die Berücksichtigung von Fremdlicht noch flexibler zu gestalten, wird gemäß der Erfindung auch vorgeschlagen, im Bereich rund um den Bildschirm auf der Betrachtungsfläche Lichtsensoren anzuordnen, die eine spektrale Empfindlichkeit gemäß der Hellempfindlichkeit $V_\lambda \square$ des menschlichen visuellen Systems besitzen. Solche Sensoren sind kommerziell verfügbar. Eine mögliche Anordnung solcher Sensoren ist in **Figur 6** skizziert, wo die Betrachtungskabine 1 mit Bildschirm 2, Betrachtungsfläche 4 und Farbproben 4.1 dargestellt wind. Beispielhaft sind acht Sensoren 8 rund um den Bildschirm eingezeichnet. Damit kann angenähert die Helligkeitsverteilung und insbesondere der Abfall vom unteren Bildrand bis zum oberen Bildrand abgeschätzt werden. Es wird vorgeschlagen, ein für Fremdlicht zunächst genau ermitteltes Helligkeitsprofil damit pauschal nachzuregeln, zum Beispiel indem die Randparameter des Profils auf mathematischem Wege durch globale Verbiegung des Profils an die gemessenen Werte angepasst werden, wenn sich das Fremdlicht verändert. Da sich die Sensoren in der Ebene befinden, in der im Betrieb des Arbeitsplatzes auch u.U. Farbproben angebracht werden, sollte eine Nachkalibrierung unter Nutzung der Signale der Sensoren 8 beispielsweise zu Beginn einer Arbeitsphase oder nach Hinweis auf einem Monitor eines Steuercomputers automatisiert durchgeführt werden. Während dieser Nachkalibrierung muss die Betrachtungsfläche freigehalten werden.

In Figur 6 ist auch eine mögliche Position 9 für die spektrale Messung des Fremdlichtes mit einem fest eingebauten Radiometer skizziert, welches ständig die Spektralverteilung des Fremdlichtes ermittelt und in die Berechnung einspeist.

Zusätzlich kann auch vorgesehen werden, die Helligkeit der internen Lichtquelle über Lichtsensoren zu stabilisieren, die im oberen Bereich der Kabine so angeordnet werden, dass sie kein Fremdlicht empfangen.

Alternativ wird auch vorgeschlagen, die gesamte Beleuchtung des Bildschirmes nur durch eine feste Raumbeleuchtung z.B. als Deckenbeleuchtung in einem Raum zu realisieren, also gar keine Kabine mehr zu verwenden. Sinngemäß kann das Verfahren der Farbreproduktion durch Ausmessen der spektralen Verteilung und Helligkeit der Beleuchtung am Ort des Bildschirmes dann ebenfalls angewendet werden. Vorzugsweise sollte für diesen Fall das Deckenlicht dann aber unter angenähert 45 Grad auf die Bildfläche auftreffen, und Glanzeffekte durch Lichtanteile in der Nähe der Richtung senkrecht zum Bildschirm müssen vermieden werden. Dies Lösung erfordert allerdings eine zeitlich konstante Beleuchtung in einem abgeschlossenen Raum. Veränderungen der Helligkeit von Farben, die am Bildschirm reproduziert werden können, sind durch die maximale Bildhelligkeit begrenzt. Dadurch sind die hohen Helligkeiten von natürlichem Sonnenlicht und durch ein Fenster einfallendes Licht zumindest mit der zur Zeit verfügbaren Bildschirmtechnik nicht reproduzierbar.

Wie bereits in der Einleitung erwähnt wurde, kann eine exakt mit einer Originalfarbe übereinstimmende Farbreproduktion nur erreicht werden, wenn die tatsächlich wirksamen Grundspektralwertkurven des menschlichen Beobachters in der Berechnung benutzt werden. Diese sind von individuellen Eigenschaften des Beobachters, wie z.B. von seinem Alter abhängig, sie verändern sich aber auch systematisch mit dem Beobachterwinkel als Öffnungswinkel $\omega$, unter dem eine Farbfläche betrachtet wird. Da zur Zeit noch keine einfachen Messmethoden für die Ermittlung von Grundspektralwertkurven eines menschlichen Beobachters vorhanden sind, können die grundsätzlichen Eigenschaften eines Beobachters nur durch Auswahl von Grundspektralwertkurven berücksichtigt werden, für die die besten Ergebnisse erzielt werden. Es ist bekannt, dass Grundspektralwertkurven wie z.B. die von Judd 1951 oder Stiles 1959 gemessenen [3] für viele Beobachter bessere visuelle Ergebnisse liefern als die Normspektralwertkurven.

Die Abhängigkeit von dem bei der Betrachtung wirksamen Beobachterwinkel ist dagegen durch Modelle beschrieben worden [4]. Mit diesen Modellen kann eine Veränderung von Grundspektralwertkurven mit dem Beobachterwinkel berechnet werden. Es wird in einer weiteren Ausgestaltung der Erfindung vorgeschlagen, mit dem Beobachterwinkel $\omega$ einer Farbfläche variable Spektralwertkurven bei einer Farbreproduktion im Softproof-Arbeitsplatz zu verwenden. Die dazu notwendigen Spektralwertkurven als Funktion des Beobachterwinkels $\omega$ für einen gewählten Beobachter i können dazu als Modell mathematisch jeweils berechnet werden. Für die Praxis zweckmäßiger ist eine Vorberechnung in Stufen des Winkels, mit denen sich die Funktionen nur geringfügig ändern, beispielsweise in Stufen von einem Grad.

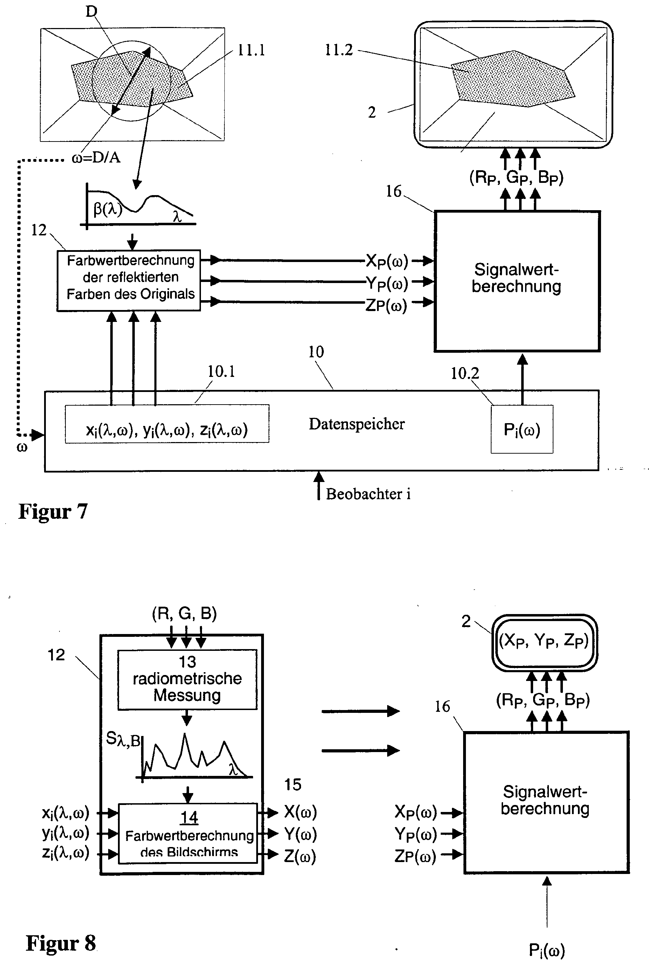

Anhand von **Figur 7** wird beispielhaft dargestellt, wie variable Spektralwertkurven bei der Bildreproduktion erfindungsgemäß eingesetzt werden können. Angenommen wird, dass die Spektralwertkurven $x_i(\lambda,\omega)$, $y_i(\lambda,\omega)$ und $z_i(\lambda,\omega)$ für verschiedene Beobachter i und in Schritten abgestufte Beobachterwinkel $\omega$ in einer Datenbank 10 unter 10.1 gespeichert sind. Für eine Reproduktion muss ein Beobachter i ausgewählt werden. Die Wahl des für eine Farbfläche gültigen Beobachterwinkels $\omega$ kann aus der darzustellenden Bildinformation abgeleitet werden. Das Bild wird dazu in Bereiche mit angenähert gleicher Farbe segmentiert. Für einen solchen Bereich 11.1 wird dann eine mittlere Größe z.B. aus dem Flächeninhalt bestimmt, der dann einem mittleren Durchmesser D der Farbfläche zugeordnet wird. Dieser wird mit dem - hier nicht dargestellten - Abstand A des Beobachters i vom Bildschirm in den Beobachterwinkel von angenähert $\omega \cong D/A$ umgerechnet. Mit dem Beobachterwinkel $\omega$ wird dann - abgestuft in Schritten - ein Satz von Spektralwertkurven aus der Datenbank abgerufen. Mit dem Spektrum $\beta(\lambda)$ der Bildpunkte der Farbfläche, die z.B. mit einer multispektralen Farbaufnahme gemessen wurde, kann dann für jeden Bildpunkt der auf dem Bildschirm zu reproduzierende Farbwert berechnet werden, wobei, wie vorstehend beschrieben, das erfindungsgemäße Berechnungsverfahren unter Einbezug von interner Lichtquelle und Fremdlicht sowie Helligkeitsprofil und Lichtreflexion an der Bildschirmoberfläche in die Farbwertberechnung 12 einbezogen werden. Der jeweils für einen Bildpunkt berechnete Farbwert $X_P(\omega)$, $Y_P(\omega)$ und $Z_P(\omega)$ wird über ein beobachterspezifisches Bildschirmprofil $P_i\{\omega\}$ auf dem Bildschirm reproduziert, indem in der Signalwertberechnung 16 über das Bildschirmprofil $P_i\{\omega\}$ die Steuersignale $R_P$, $G_P$ und $B_P$ des Bildschirmes 2 für eine Farbe berechnet werden und darüber das Farbbild 11.2 auf dem Bildschirm 2 reproduziert werden.

Bei dieser Reproduktion muss beachtet werden, dass auch die Kalibrierung des Bildschirmes, also das sogenannte Bildschirmprofil, jeweils abhängig von dem gewählten Beobachter und seinen Grundspektralwertkurven neu erstellt werden muss. Das Bildschirmprofil beschreibt den Zusammenhang zwischen den zur Steuerung der Farben benutzten RGB Signalen am Eingang des Bildschirmes und den daraus auf der Bildschirmoberfläche erzeugten Farbwerten, z.B. in X, Y, Z. Dieser Zusammenhang wird messtechnisch ermittelt und kann analytisch durch ein Modell oder als Tabelle von Stützpunkten beschrieben werden (=Rückwärtsmodell).

Für die Anwendung zur Reproduktion von Farben muss aus diesem Modell ein sogenannte invertiertes Modell ermittelt werden, welches den vorgegebenen, zu reproduzierenden Farbwerten die notwendigen RGB-Signale am Eingang zuordnet. Ein solches invertiertes Modell (=Vorwärtsmodell) wird aus dem analytisch oder durch Stützpunkte berechneten Rückwärtsmodell entweder durch analytische Inversion oder durch Suchverfahren und Interpolationsmethoden aus dem Stützpunktmodell vorberechnet und als Bildschirmprofil gespeichert. Die prinzipielle Vorgehensweise für die Erstellung eines solchen Bildschirmprofiles ist bekannt, jedoch werden heute nur Bildschirmprofile auf der Grundlage eines Normbeobachters nach CIE erstellt und alle verfügbaren Softwareverfahren für das "Color Management" von Bildschirmen sind nur dafür ausgelegt. Für abweichende Beobachter steht auch keine Messtechnik zur Verfügung, mit der direkt Farbwerte auf der Bildschirmoberfläche gemessen werden können, da auch alle Messgeräte zu Messung von Farbwerten für standardisierte Normbeobachter nach CIE und 2 oder 10 Grad ausgelegt sind und entsprechende Farbwerte für abweichende Beobachter sich davon unterscheiden. Für die Erstellung von Bildschirmprofilen für abweichende Beobachter ist eine vollständige spektrale Messung der Bildschirmfarben erforderlich.

Das Verfahren zur Erstellung eines Bildschirmprofiles $P_i(\omega)$ für einen beliebigen Beobachter i abhängig vom Beobachterwinkel $\omega$ ist beispielhaft in der **Figur 8** skizziert. Zunächst sei die Vorgehensweise der Messtechnik und die Ermittlung von Farbwerten 15 auf dem Bildschirm beschrieben. Für eine ausreichend große Anzahl von Stützpunkten werden die Spektren $S_{\lambda,B}$ der Bildschirmfarben für beliebige Eingangssignale R, G, B des Bildschirmes mit einem Spektroradiometer 13 gemessen. Mit den aus einer Datenbank 10 in Figur 7 ausgelesenen Grundspektralwertkurven eines ausgewählten Beobachters $x_i(\lambda,\omega)$, $y_i(\lambda,\omega)$, $z_i(\lambda,\omega)$ werden daraus die Farbwerte 15 mit $X(\omega)$, $Y(\omega)$, $Z(\omega)$ berechnet. Aus der Gesamtheit aller Farbwerte in Abhängigkeit der Eingabesignale wird ein mathematisches Rückwärtsmodell 12 als analytisches Modell oder interpolierbares Stützpunktraster erstellt. Dieses wird dann mathematisch invertiert und im Rahmen der Anwendung der vorliegenden Erfindung in der Datenbank 10 in Figur 8 gespeichert. Über dieses Modell können dann für jeden ausgewählten Beobachter i und als Funktion seines Beobachterwinkels $\omega$ Bildschirmprofile $x_i(\lambda\omega)$, $y_i(\lambda\omega)$, $z_i(\lambda\omega)$, $P_i(\omega)$ aus den Datenspeichern 10.1 und 10.2 (siehe FIG 7) aufgerufen werden.

**Figurenaufstellung:**

| | |
|---|---|
| Figur 1a: | Beleuchtungskabine mit nebenstehendem Bildschirm zum Farbabgleich zwischen Probe in der Beleuchtungskabine und Reproduktion auf dem Bildschirm (Stand der Technik); |
| Figur 1b: | Beleuchtungskabine aus Figur 1a im Querschnitt und Längsschnitt (Stand der Technik); |
| Figur 2: | Beleuchtungskabine mit zwei Rahmen, einerseits für die Probe und andererseits für die Reproduktion, im Querschnitt und Längsschnitt (Stand der Technik); |
| Figur 3: | Erfindungsgemäße Beleuchtungskabine mit Bildschirm; |
| Figur 4a: | Detailansicht einer Betrachtungsmaske mit Original und reproduzierter Farbe in Draufsicht und Querschnitt; |
| Figur 4b: | Bildschirm mit Betrachtungsmaske mit einer Vielzahl von über den Bildschirm verteilten Fenstern in der Betrachtungsmaske; |
| Figur 5a: | Schematische Darstellung der Beleuchtungssituation eines Bildschirms mit zwei Leuchtstoffröhren; |
| Figur 5b: | Beispielhafte Lichtmaske in Längsschnitt; |
| Figur 5c: | Lichtmaske aus Figur 5b im Längsschnitt um 90° um Längsachse gedreht; |
| Figur 6: | Erfindungsgemäße Beleuchtungskabine mit Bildschirm und Lichtsensoren am Bildschirmrand; |
| Figur 7: | Schematische Darstellung der originalgetreuen Farbreproduktion auf einem Bildschirm mit variablen Spektralwertkurven; |
| Figur 8: | Schematische Darstellung des Verfahrens zur Erstellung eines Bildschirmprofils. |

**Literatur**

[1] Mark.D.Fairchild, Color Appearance Models, Addison-Wesley Longman, Inc, Reading Massachusetts, 1998, ISBN 0-201-63464-3.

[2] CIE publication 159-2004: A Colour Appearance Model for Colour Managment systems: CIECAM02

[3] G. Wyszecki, W.S. Stiles, Color Science: Concepts and Methods, Quantitative Data and Formulae, 2nd. Edition, John Wiley & Sons, New York 1982, Chapt. 5.6

[4] F. Vienot, Report on a fundamental chromaticity diagram with physiologically significant axes, Proc. 9th Congress of the International Colour Association, SPIE Vol 4421 (2202), p. 565-570

**Liste der verwendeten Bezugszeichen und Variablen**

| 1 | Betrachtungskabine |
|---|---|
| 2 | Bildschirm |
| 2.1 | Betrachtungsbereich |
| 2.2 | Fläche eines Bildschirms |
| 3 | Beleuchtung |
| 3.1 | direkter Lichteinfall |
| 3.2 | indirekter Lichteinfall |
| 3.3 | indirekter Lichteinfall |
| 3.4.1 | Lichtmaske |
| 3.4.2 | Lichtanteile |
| 3.5.1 | Lichtmaske |
| 3.5.2 | Lichtanteile |
| 4 | Betrachtungsfläche |
| 4.1 | Farbprobe / Original |
| 4.1.1 | Testfarbe reflektierter Strahlung |
| 4.2 | Farbreproduktion |
| 4.2.1 | Licht der Reproduktion |
| 4.3 | Rahmen |
| 5 | menschlicher Beobachter |
| 6 | Maske |
| 6.2 | Fenster |
| 7.1 | Lichtstärke der Lampe L1 auf dem Bildschirm |
| 7.2 | Lichtstärke der Lampe L2 auf dem Bildschirm |
| 7.3 | Lichtstärke von L1 und L2 auf dem Bildschirm |
| 8 | Lichtsensor |
| 9 | Position für spektrale Messung von Fremdlicht |
| 10 | Datenbank |
| 10.1 | benutzerspezifische Spektralwertkurven |
| 10.2 | benutzerspezifisches Bildschirmprofil |
| 11.1 | Farbbereich des Originals |
| 11.2 | Farbbereich der Reproduktion |
| 12 | Rückwärtsmodell |
| 13 | radiometrische Messung |
| 14 | Farbwertberechnung |
| 15 | Farbwerte |
| 16 | Signalwertberechnung |
| A | Abstand |
| D | Durchmesser |
| i | Beobachterindex |
| I | Lichtintensität |
| k | Normierungskonstante |
| L1-L3 | Lampe |
| P | Streuplatte |
| $P_i$, $P_i(\omega)$ | Bildschirmprofil für den Beobachterwinkel $\omega$ |
| R1, R2, R3 | Reflektoren |
| $R_p, G_p, B_p$ | Steuersignale |
| R, G, B | Eingangssignale |
| $S_\lambda$ | spektrale Lichtverteilung |
| $S_{\lambda,B}$ | Spektren der Bildschirmfarbe |
| $V_\lambda$ | Hellempfindlichkeit |
| $x_{(\lambda)}, y_{(\lambda)}, z_{(\lambda)}$ | Spektralwertkurven |
| $x_i(\lambda\omega), y_i(\lambda\omega), z_i(\lambda\omega)$ | Spektralwertkurven |

| X,Y,Z | Normfarbwerte |
| Xw,Yw,Zw | Farbwerte für ein Bezugsweiss |
| Xp,Yp,Zp | zu reproduzierende Farbwerte |
| Xr,Yr,Zr | Farbwerte reflektierender Anteile |
| $X_{P,F}, Y_{P,F}, Z_{P,F}$ | Farbwerte aus der Beleuchtung durch Fremdlicht |
| $X_P(\omega), Y_P(\omega), Z_P(\omega)$ | Farbwerte für den Beobachterwinkel $\omega$ |
| $\alpha$ | Betrachtungswinkel zum Lichteinfall |
| $\beta(\lambda)$ | spektrale Reflexion |
| $\omega$ | Beobachterwinkel / Öffnungswinkel einer Farbfläche |

**Patentansprüche**

1. Verfahren zur Bildschirmkalibrierung für die originalgetreue Reproduktion von Oberflächenfarben, deren spektrale Reflexionsverteilung ausgemessen und bekannt ist, auf einem Bildschirm, der unter einfallendem Licht von mindestens einer Lichtquelle mit Einfallswinkeln des Lichtes außerhalb des Glanzwinkels und mit bekannten spektralen Lichtverteilungen betrieben wird, wobei der Bildschirm durch Einstellung von Parametern mit Hilfe von Software und elektronischer Steuerung in jedem Teilbereich des Bildschirms beeinflussbar ist,
**dadurch gekennzeichnet, dass**

1.1. in jedem Teilbereich des Bildschirms der reproduzierte Farbeindruck des Bildschirms an den Farbeindruck eines Originals angepasst wird, indem das Original unmittelbar angrenzend auf der Bildschirmoberfläche mit den Bildschirmfarben verglichen wird und die Bildschirmparameter so lange verändert werden, bis der Farbeindruck des Originals und des Bildschirms an der jeweils betrachteten Bildschirmteilfläche für feinen Beobachter, betrachtet aus einem vorbestimmten Beobachterwinkel, identisch erscheint,

1.2. und die vorgenommenen Einstellungen in einem Bildschirmprofil hinterlegt werden, wobei

1.3. eine Maske vor dem Bildschirm verwendet wird, die eine über die gesamte Bildfläche verteilte Anzahl von Fenstern enthält, wobei jedes Fenster teilweise, vorzugsweise zur Hälfte, mit einem Original einer Oberflächenfarbe abgedeckt ist und hinter jeder der nicht abgedeckten Fensterteilflächen auf dem Bildschirm die der jeweiligen Oberflächenfarbe zugeordnete Farbreproduktion erzeugt wird, und

1.4. die Software in einem den Bildschirm ansteuernden Computer abläuft, mit der die Helligkeit der reproduzierten Farben in jedem Fenster verändert und so eingestellt werden kann, sodass

1.4.1. für den Beobachter kein Helligkeitsunterschied zwischen originaler- und reproduzierter Farbe unter der Beleuchtung des Bildschirmes mehr besteht, und

1.4.2. die Helligkeitswerte als Stützpunkte gespeichert werden und daraus ein Helligkeitsprofil erstellt wird, welches die absolute Helligkeit für jede in einem Bildpunkt reproduzierte Farbe steuert, und

1.5. der Helligkeitsabgleich und die Ermittlung der Stützpunkte für das Helligkeitsprofil des Bildschirmes dadurch automatisch durchgeführt wird, dass als Beobachter eine Kamera das Bild der Maske aufnimmt,

1.5.1. wobei für jedes Fenster der Maske der Bereich der Oberflächenfarben und der durch den Bildschirm reproduzierten Farben selektiert und innerhalb dieser Bereiche gemessene und gemittelte Farbsignale erzeugt werden,

1.5.2. diese Farbsignale einem Computer zugeführt werden, der den Monitor steuert und dabei iterativ die Helligkeit der Farbsignale so verändert werden, bis in jedem Fenster die durch die Oberflächenfarbe und ihre Reproduktion erzeugten Farbsignale gleich groß werden.

2. Verfahren gemäß dem voranstehenden Patentanspruch 1, **dadurch gekennzeichnet, dass** jedes Fenster zur Hälfte mit einem Original einer Oberflächenfarbe abgedeckt ist.

3. Verfahren gemäß einem der voranstehenden Patentansprüche 1 bis 2, **dadurch gekennzeichnet, dass** die Kamera mit einem optischen Filter ausgestattet ist, welches zusammen mit der spektralen Empfindlichkeit der Kamera eine spektrale Gesamtempfindlichkeit der Bildaufnahme ergibt, die einer spektralen Hellempfindlichkeit $V_\lambda$ eines ausgewählten Beobachters entspricht.

4. Verfahren gemäß einem der voranstehenden Patentansprüche 1 bis 3, **dadurch gekennzeichnet, dass**

4.1. die durch Reflexion des Lichtes an der Bildschirmoberfläche in Richtung des Beobachters auftretenden Farbreize in ihrer spektralen Verteilung und ihrer Intensität ausgemessen werden,

4.2. diese Farbreize als reflektierte Farbwerte des Bildschirms für den Beobachter beschrieben werden

4.3. und auf dem Bildschirm nur die Differenzen von Farbwerten originaler Farben und den reflektierten Farbwerten reproduziert werden.

5. Verfahren gemäß einem der voranstehenden Patentansprüche 1 bis 4, **dadurch gekennzeichnet, dass** die durch Reflexion des Lichtes an der Bildschirmoberfläche in Richtung des Beobachters auftretenden Farbreize bei der Vermessung des Bildschirmprofils bei eingeschalteter Beleuchtung direkt mit gemessen und dann in dem oder einem gespeicherten Bildschirmprofil enthalten sind.

6. Verfahren gemäß einem der voranstehenden Patentansprüche 1 bis 5, **dadurch gekennzeichnet, dass**

6.1. der Bildschirm in einer Kabine angeordnet ist,
6.2. die horizontale Bildschirmmitte im vertikalen Schnitt unter 45 Grad beleuchtet wird, indem die Beleuchtung durch ausgedehnte stabförmige Lichtquellen ausgeführt wird, die oberhalb oder unterhalb des Bildschirmes montiert sind,
6.3. und eine Homogenisierung der Beleuchtungsverteilung auf der Bildfläche erreicht wird, indem Teillichtabdeckungen (=Masken) im Strahlengang des Lichtes von den Lichtquellen bis zum Bildschirm angebracht werden, welche aufgrund ihrer Formgebung Anteile der Lichtstrahlen von den Lichtquellen auf dem Wege zum Bildschirm orts- und/oder winkelabhängig blockieren oder hindurchlassen.

7. Verfahren gemäß einem der voranstehenden Patentansprüche 1 bis 6, **dadurch gekennzeichnet, dass** die spektrale Verteilung der Beleuchtung mit Hilfe eines unmittelbar am Bildschirm angeordneten Spektrometers gemessen wird und das Ergebnis der spektralen Lichtverteiung bei Erstellung des Bildschirmprofils berücksichtigt wird.

8. Verfahren gemäß einem der voranstehenden Patentansprüche 1 bis 5, **dadurch gekennzeichnet, dass** der Bildschirm unter einer internen Lichtquelle in einer Kabine betrieben wird und zusätzlich von außen auf die Betrachtungsfläche einfallendes Licht mit gleicher oder anderer spektraler Verteilung in die Berechnung der Reproduktion der Farbe einbezogen wird, wobei auch die lokale Farbverteilung getrennt für das von außen einfallende Licht und das von der internen Lichtquelle stammende Licht ermittelt wird und die Farbreproduktion als Summe aus den Farbwerten unter der internen und externen Beleuchtung dargestellt werden.

9. Verfahren gemäß dem voranstehenden Patentanspruch 8, **dadurch gekennzeichnet, dass** die Helligkeitsverteilung des von außen einfallenden Lichtes bei abgeschalteter interner Lichtquelle über Sensoren, die auf der Betrachtungsfläche in der Kabine verteilt sind, gemessen wird.

10. Verfahren gemäß einem der voranstehenden Patentansprüche 1 bis 9, **dadurch gekennzeichnet, dass**

10.1. zur Berechnung der Farben aus den spektralen Reflexionseigenschaften von Originalfarben und zur Berechnung der Farbreproduktion über den Bildschirm, von der Größe einer Farbfläche und ihrem daraus folgenden Beobachterwinkel abhängige variable Grundspektralwertkurven benutzt werden,
10.2. und ein Farbbild dazu in Bereiche annähernd gleicher oder im Mittel gleich erscheinender Farben segmentiert wird und der jeweils zugeordnete Beobachterwinkel für ein Segment aus den jeweils mittleren Größen eines Farbsegmentes in einem Bild ermittelt wird.

11. Verfahren gemäß einem der voranstehenden Patentansprüche 1 bis 10, **dadurch gekennzeichnet, dass**

11.1. für die Farbreproduktion mit unterschiedlichen Beobachtern eine Datenbank aufgebaut wird, in der analytisch beschrieben oder in Stufen als Funktion des Beobachterwinkels die Grundspektralwertkurven von verschiedenen Beobachtern gespeichert sind,
11.2. Farbwerte von Originalfarben aus ihrer spektralen Reflexion für die variablen Grundspektralwertkurven gebildet werden,
11.3. die Bildschirmfarben aus ihrer spektralen Strahlungsverteilung auf dem Bildschirm beschrieben und daraus Farbwerte für den Aufbau von Bildschirmprofilen in Abhängigkeit von Beobachtern und Beobachterwinkeln berechnet werden,
11.4. diese Bildschirmprofile in Echtzeitverarbeitung für die Farbreproduktion von Bildern oder als vorberechnete Profile in einer Datenbank abgelegt und in Abhängigkeit des ausgewählten Beobachters und Beobachterwinkels aufgerufen werden.

12. Verwendung einer Vorrichtung zur Reproduktion eines Farbeindruckes eines Originals bei einem Beobachter, aufweisend

- einen Bildschirm zur Farbreproduktion,
- eine Maske vor dem Bildschirm, die eine über die gesamte Bildfläche verteilte Anzahl von Fenstern enthält, wobei jedes Fenster teilweise, vorzugsweise zur Hälfte, mit einem Original einer Oberflächenfarbe abdeckbar ist und hinter jeder der nicht abgedeckten Fensterteilflächen auf dem Bildschirm die der jeweiligen Oberflächenfarbe zugeordnete Farbreproduktion erzeugbar ist,
- eine Kamera,
- einen Computer mit Software zur Steuerung des Bildschirmes und
- eine Beleuchtungsvorrichtung für die definierte Beleuchtung der Umgebung des Bildschirms, wobei

12.1. der Bildschirm in einer Kabine oder einem Raum angeordnet ist,
12.2. die Beleuchtung durch ausgedehnte stabförmige Lichtquellen ausgeführt wird, die oberhalb oder unterhalb des Bildschirmes derart montiert sind, so dass die horizontale Bildschirmmitte im vertikalen Schnitt unter 45 Grad beleuchtet wird,
12.3. eine Homogenisierung der Beleuchtungsverteilung auf der Bildfläche erreicht wird, indem Teillichtabdeckungen im Strahlengang des Lichtes von den Lichtquellen bis zum Bildschirm angeordnet sind, welche aufgrund ihrer Formgebung Anteile der Lichtstrahlen von den Lichtquellen auf dem Wege zum Bildschirm orts- und/oder winkelabhängig blockieren oder hindurchlassen, und
12.4. im Computer Software vorliegt, welche im Betrieb das Verfahren gemäß einem der Ansprüche 1 bis 11 durchführt.

## Claims

1. Method for calibrating a screen for the true to original reproduction of surface colours whose spectral reflectance distribution is measured and known on a screen, which is operated under incident light from at least one light source with angles of incidence of the light that are outside the grazing angle and with known spectral light distributions, wherein the screen is able to be influenced by setting parameters using software and electronic control in each subregion of the screen,
**characterized in that**

1.1. in each subregion of the screen, the reproduced colour impression of the screen is adapted to the colour impression of an original by comparing the original directly adjacent on the screen surface to the screen colours and changing the screen parameters until the colour impression of the original and of the screen at the respectively observed screen partial surface appears to be identical for an observer, observed from a predetermined observer angle,
1.2. and the settings performed are stored in a screen profile, wherein
1.3. a mask is used in front of the screen, which contains a number of windows that are distributed over the entire image surface, wherein each window is covered partially, preferably half-covered, by an original of a surface colour, and the colour reproduction which is assigned to the respective surface colour is produced behind each of the non-covered window partial surfaces on the screen, and
1.4. that software runs in a computer actuating the screen with which the brightness of the reproduced colours in each window can be changed and set such that
1.4.1. for the observer no brightness difference between original and reproduced colour under the illumination of the screen exists anymore, and
1.4.2. the brightness values are stored as support points, and established therefrom is a brightness profile which controls the absolute brightness for each colour that is reproduced in a pixel, and
1.5. the brightness correction and the ascertainment of the support points for the brightness profile of the screen are performed automatically by a camera, as an observer, recording the image of the mask,
1.5.1. wherein the region of the surface colours and of the colours which are reproduced by the screen are selected for each window of the mask and colour signals which are measured and averaged within these regions are produced,
1.5.2. said colour signals are fed to a computer which controls the monitor, and in the process the brightness of the colour signals is iteratively changed until the colour signals produced by the surface colour and its reproduction are equal in each window.

2. Method according to the previous Claim 1, **characterized in that** each window is half-covered by an original of a surface colour.

3. Method according to one of the preceding Claims 1 to 2, **characterized in that** the camera is equipped with an optical filter, which together with the spectral sensitivity of the camera produces a total spectral sensitivity of the image recording which corresponds to a spectral brightness sensitivity $V_\lambda$ of a selected observer.

4. Method according to one of the preceding Claims 1 to 3, **characterized in that**

4.1. the colour stimuli occurring due to reflection of the light at the screen surface in the direction of the observer are measured in terms of their spectral distribution and intensity,
4.2. said colour stimuli are described as reflected colour values of the screen for the observer,
4.3. and only the differences of colour values of original colours and the reflected colour values are reproduced on the screen.

5. Method according to one of the preceding Claims 1 to 4, **characterized in that** the colour stimuli occurring due to reflection of the light at the screen surface in the direction of the observer are directly measured during the measurement of the screen profile with switched-on illumination and are then contained in the, or in a, stored screen profile.

6. Method according to one of the preceding Claims 1 to 5, **characterized in that**

6.1. the screen is arranged in a compartment,
6.2. the horizontal screen centre is illuminated in vertical section at 45° by performing the illumination using extensive linear light sources which are mounted above or below the screen,
6.3. and a homogenization of the illumination distribution on the image surface is achieved by way of attaching partial light covers (= masks) in the beam path of the light from the light sources to the screen, which partial light covers block or transmit components of the light beams from the light sources on their path to the screen in spatial and/or angle-dependent fashion due to their shape.

7. Method according to one of the preceding Claims 1 to 6, **characterized in that** the spectral distribution of the illumination is measured using a spectrometer which is arranged directly at the screen and the result of the spectral light distribution is taken into consideration when establishing the screen profile.

8. Method according to one of the preceding Claims 1 to 5, **characterized in that** the screen is operated under an internal light source in a compartment and additionally light having the same or different spectral distribution that is incident on the observation surface from outside is included in the calculation of the reproduction of the colour, wherein the local colour distribution is also ascertained separately for the light that is incident from outside and the light coming from the internal light source, and the colour reproduction is represented as a sum from the colour values under the internal and external illumination.

9. Method according to the previous Claim 8, **characterized in that** the brightness distribution of the light that is incident from outside in the case of a switched-off internal light source is measured by sensors which are distributed on the observation surface in the compartment.

10. Method according to one of the preceding Claims 1 to 9, **characterized in that**

10.1. variable basic spectral value curves which are dependent on the size of a colour surface and its resulting observer angle are used for calculating the colours from the spectral reflection properties of original colours and for calculating the colour reproduction over the screen,
10.2. and a colour image is segmented into regions of colours which are approximately identical or appear identical on average, and the respectively assigned observer angle for a segment is ascertained from the respectively average sizes of a colour segment in an image.

11. Method according to one of the preceding Claims 1 to 10, **characterized in that**

11.1. for the colour reproduction with different observers a database is established in which, analytically described or in steps as a function of the observer angle, the basic spectral value curves of different observers are stored,
11.2. colour values of original colours are formed from their spectral reflectance for the variable basic spectral value curves,

11.3. the screen colours are described from their spectral radiation distribution on the screen and colour values are calculated therefrom for the establishment of screen profiles in dependence on observers and observer angles,

11.4. said screen profiles are stored in a database in real-time processing for the colour reproduction of images or as previously calculated profiles and are retrieved in dependence on the selected observer and observer angle.

**12.** Use of an apparatus for reproducing a colour impression of an original in an observer, having

- a screen for colour reproduction,
- a mask in front of the screen which contains a number of windows distributed over the entire image surface, wherein each window is able to be covered partially, preferably half-covered, by an original of a surface colour, and the colour reproduction that is assigned to the respective surface colour is able to be produced behind each of the non-covered window partial surfaces on the screen,
- a camera,
- a computer with software for controlling the screen, and
- an illumination apparatus for the defined illumination of the environment of the screen, wherein

12.1. the screen is arranged in a compartment or a space,

12.2. the illumination is performed by extensive linear light sources, which are mounted above and below the screen such that the horizontal screen centre is illuminated in vertical section at 45°,

12.3. a homogenization of the illumination distribution on the image surface is achieved by arranging partial light covers in the beam path of the light from the light sources to the screen, which partial light covers block or transmit components of the light beams from the light sources on their way to the screen in spatial and/or angle-dependent fashion due to their shape, and

12.4. software is provided in the computer which during operation performs the method according to one of Claims 1 to 11.

**Revendications**

1.  Procédé de pcalibration d'écran pour la reproduction fidèle à l'original de couleurs de surface, dont la distribution spectrale de réflection est connue et mesurée, sur un écran, lequel est utilisé sous une lumière incidente venant d'au moins une source de lumière avec un angle d'incidence de la lumière hors de l'angle de Bragg et avec une distribution spectrale connue, dans lequel l'écran peut être influencé par la configuration de paramètres à l'aide d'un logiciel et d'une commande électronique dans chaque partie de l'écran,
    **caractérisé en ce que**

    1.1 dans chaque partie de l'écran l'impression couleur reproduite de l'écran est adaptée à l'impression couleur d'un original, l'original étant comparé avec les couleurs de l'écran en étant directement adjacent à la surface de l'écran et les paramètres d'affichage étant modifiés jusqu'à ce que l'impression couleur de l'original paraisse identique à l'impression couleur de l'écran dans la partie de l'écran observée pour un observateur depuis un angle d'observation prédéfini,

    1.2 et les réglages effectués étant enregistrés dans un profil d'écran, dans lequel

    1.3 un masque est utilisé devant l'écran, contenant un nombre de fenêtres réparties sur toute la surface de l'écran, dans lequel chaque fenêtre est couverte partiellement, de préférence à moitié, par un original d'une surface de couleur et la reproduction couleur ordonnée à la surface de couleur respective est produite derrière chacune des parties de fenêtre non recouvertes sur l'écran, et

    1.4 le logiciel est en cours d'exécution sur un ordinateur contrôlant l'écran, permettant de modifier la luminosité des couleurs reproduites dans chaque fenêtre et pouvant être configuré de façon à

    1.4.1 ce qu'il n'y ait pour l'observateur aucune différence de luminosité entre la couleur originale et la couleur reproduite sous l'éclairage de l'écran, et

    1.4.2 les valeurs de luminosité soient enregistrées comme points de repère et un profil de luminosité soit établi à partir de celles-ci, lequel commande la luminosité absolue pour chacune des couleurs reproduites dans un élément de l'image, et

    1.5 le réglage de luminosité et la détermination des points de repère pour le profil de luminosité de l'écran sont ainsi effectués automatiquement, **en ce qu'**en tant qu'observateur une caméra enregistre l'image du masque,

1.5.1 dans lequel pour chaque fenêtre du masque la zone des couleurs de surface et la zone des couleurs reproduites par l'écran sont sélectionnées et les signaux de couleurs mesurés et moyennés dans ces zones sont produits,

1.5.2 ces signaux de couleurs sont transmis à un ordinateur, lequel commande le moniteur, et la luminosité des signaux est ainsi modifiée de manière itérative jusqu'à ce que dans chaque fenêtre les signaux de couleur produits par la surface de couleur et par sa reproduction soient identiques.

2. Procédé selon la revendication 1 ci-dessus, **caractérisé en ce que** chaque fenêtre est recouverte à moitié par un original d'une surface de couleur.

3. Procédé selon l'une des revendications 1 et 2 ci-dessus, **caractérisé en ce que** la caméra est équipée d'un filtre optique, lequel fournit en combinaison avec la sensibilité spectrale de la caméra une sensibilité spectrale totale de l'acquisition d'image, qui correspond à une sensibilité spectrale de luminosité $V_\lambda$ d'un observateur sélectionné.

4. Procédé selon l'une des revendications 1 à 3 ci-dessus, **caractérisé en ce que**

4.1 les stimuli de couleur survenant par réflection de la lumière sur la surface de l'écran dans la direction de l'observateur sont mesurés en distribution spectrale et en intensité,

4.2 ces stimuli sont décrits comme valeurs chromatiques réfléchies de l'écran pour l'observateur

4.3 et seules les différences entre les valeurs chromatiques des couleurs originales et les valeurs chromatiques réfléchies sont reproduites.

5. Procédé selon l'une des revendications 1 à 4 ci-dessus, **caractérisé en ce que** les stimuli de couleur survenant par réflection de la lumière sur la surface de l'écran dans la direction de l'observateur sont mesurés directement lors de la mesure du profil de l'écran avec éclairage allumé et ensuite contenus dans ce profil ou dans un profil enregistré.

6. Procédé selon l'une des revendications 1 à 5 ci-dessus, **caractérisé en ce que**

6.1 l'écran est agencé dans une cabine,

6.2 le centre horizontal de l'écran est éclairé en section verticale sous un angle de 45°, l'éclairage étant effectué au moyen de sources lumineuses étendues en forme de bâtonnet, lesquelles sont montées au-dessus ou en dessous de l'écran,

6.3 et une homogénéisation de la distribution d'éclairage sur la surface de l'image est obtenue, des recouvrements de fraction lumineuse (= masques) étant disposés dans le chemin d'onde de la lumière entre la source lumineuse et l'écran, et bloquant ou laissant passer, en raison de leur conception, les ondes lumineuses de la source lumineuse sur le chemin de l'écran en fonction du lieu et/ou de l'angle.

7. Procédé selon l'une des revendications 1 à 6 ci-dessus, **caractérisé en ce que** la distribution spectrale de l'éclairage est mesurée à l'aide d'un spectromètre directement agencé à l'écran et **en ce que** le résultat de la distribution spectrale est pris en compte lors de la création du profil de l'écran.

8. Procédé selon l'une des revendications 1 à 5 ci-dessus, **caractérisé en ce que** l'écran est utilisé sous une source de lumière dans une cabine et qu'en outre la lumière incidente à la surface d'observation provenant de l'extérieur, dotée d'une distribution spectrale identique ou différente, est intégrée dans le calcul de la reproduction de la couleur, dans lequel la fraction colorée locale est déterminée séparément pour la lumière incidente provenant de l'extérieur et la lumière émanant de la source interne et la reproduction des couleurs est réalisée comme somme des valeurs chromatiques sous l'éclairage interne et externe.

9. Procédé selon la revendication 8 ci-dessus, **caractérisé en ce que** la distribution de luminosité de la lumière incidente venue de l'extérieur est mesurée, lorsque la source de lumière interne est éteinte, au moyen de capteurs répartis sur la surface d'observation de la cabine.

10. Procédé selon l'une des revendications 1 à 9 ci-dessus, caractérisé en ce

10.1 qu'afin de calculer les couleurs à partir des propriétés de réflection spectrale des couleurs originales et afin de calculer la reproduction des couleurs sur l'écran, des courbes variables de valeurs spectrales de base, qui sont fonction de la taille de la surface colorée et de l'angle d'observation qui en résulte, sont utilisées,

10.2 et une image couleur est segmentée en zones de couleurs approximativement identiques ou en moyenne sensiblement identiques et l'angle d'observation respectivement agencé pour un segment est déterminé à partir de la taille moyenne respective d'un segment de couleur dans une image.

**11.** Procédé selon l'une des revendications 1 à 10 ci-dessus, caractérisé en ce

11.1 qu'une base de données est constituée pour la reproduction des couleurs avec différents observateurs, les courbes de valeurs spectrales de base de différents observateurs sont décrites analytiquement ou par parties en fonction de l'angle d'observation,

11.2 les valeurs chromatiques des couleurs originales sont obtenues à partir de leur réflection spectrale pour les courbes variables de valeurs spectrales de base,

11.3 les couleurs à l'écran sont décrites à partir de leur distribution spectrale de rayonnement sur l'écran et, à partir de celles-ci, les valeurs chromatiques pour la création de profils d'écran sont calculées en fonction des observateurs et des angles d'observation,

11.4 ces profils d'écrans sont utilisés dans le traitement en temps réel pour la reproduction couleur d'images ou disposés en tant que profils précalculés dans une banque de données et sont chargés en fonction de l'observateur et de l'angle d'observation sélectionné.

**12.** Application d'un dispositif pour la reproduction d'une impression couleur d'un original par un observateur, comprenant

- un écran pour la reproduction couleur,
- un masque devant l'écran, contenant un nombre de fenêtres réparties sur toute la surface de l'écran, dans lequel chaque fenêtre peut être couverte partiellement, de préférence à moitié, par un original d'une surface de couleur et la reproduction couleur ordonnée à la surface de couleur respective peut être produite derrière chacune des parties de fenêtre non recouvertes sur l'écran,
- une caméra,
- un ordinateur doté d'un logiciel de commande de l'écran et
- un dispositif d'éclairage pour l'éclairage défini de l'environnement de l'écran, dans lequel 12.1 l'écran est agencé dans une cabine ou dans une pièce,

12.2 l'éclairage est effectué au moyen de sources lumineuses étendues en forme de bâtonnet, lesquelles sont montées au-dessus ou en dessous de l'écran de telle sorte que le centre horizontal de l'écran est éclairé en section verticale sous un angle de 45°,

12.3 une homogénéisation de la distribution d'éclairage sur la surface de l'image est obtenue, des recouvrements de fraction lumineuse étant agencés dans le chemin d'onde de la lumière entre la source lumineuse et l'écran, et bloquant ou laissant passer, en raison de leur conception, les ondes lumineuses de la source lumineuse sur le chemin de l'écran en fonction du lieu et/ou de l'angle, et

12.4 un logiciel est présent dans l'ordinateur et effectue en fonctionnement le procédé selon une des revendications 1 à 11.

**Figur 1a**

**Stand der Technik**

Schnitt A-A

**Figur 1b**

**Figur 2**

**Figur 3**

4.1

3

6

4.1.1

4.1

4.2.1

4.2.1

4.2

4.2

**Figur 4b**

4.3

6

2

4.1

4.2

6.2

**Figur 4a**

**Figur 5a**

**Figur 5b**

**Figur 5c**

**Figur 6**

**Figur 7**

**Figur 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10121984
- DE 10121984 A1
- US 5634117 A
- DE 102005028487 A1
- US 4106846 A
- EP 1889721 A1
- WO 0128231 A
- US 5638117 A
- DE 4119489 C2

**In der Beschreibung aufgeführte Nicht-Patentliteratur**

- **MARK.D.FAIRCHILD.** Color Appearance Models. Addison-Wesley Longman, Inc, 1998
- **G. WYSZECKI ; W.S. STILES.** Color Science: Concepts and Methods, Quantitative Data and Formulae. John Wiley & Sons, 1982
- **F. VIENOT.** Report on a fundamental chromaticity diagram with physiologically significant axes, Proc. 9th Congress of the International Colour Association. *SPIE,* vol. 4421 (2202), 565-570